# EUROPEAN PATENT SPECIFICATION

(11) **EP 3 971 838 B1**
(45) Date of publication and mention of the grant of the patent: **14.10.2026**
(21) Application number: 20809104.1
(22) Date of filing: 06.05.2020
(51) Int. Cl.: G06T 15/04, G06T 13/40, G06T 17/00

(54) **PERSONALIZED FACE DISPLAY METHOD AND APPARATUS FOR THREE-DIMENSIONAL CHARACTER, AND DEVICE AND STORAGE MEDIUM**
PERSONALISIERTES GESICHTSANZEIGEVERFAHREN UND VORRICHTUNG FÜR DREIDIMENSIONALES ZEICHEN SOWIE VORRICHTUNG UND SPEICHERMEDIUM
PROCÉDÉ ET APPAREIL D'AFFICHAGE DE VISAGE PERSONNALISÉ POUR UN PERSONNAGE TRIDIMENSIONNEL ET DISPOSITIF ET SUPPORT DE STOCKAGE

(30) Priority: 17.05.2019 CN 201910414362
(43) Date of publication of application: 23.03.2022
(73) Proprietor: Tencent Technology (Shenzhen) Company Limited, Shenzhen, Guangdong 518057 (CN)
(72) Inventor: LIU, Mianguang, Shenzhen, GUANGDONG 518057 (CN)
(74) Representative: Novagraaf International SA
(86) International application number: PCT/CN2020/088772
(87) International publication number: WO 2020/233403

(56) References cited:
- CN-A- 107 204 036
- CN-A- 108 305 309
- CN-A- 109 603 151
- CN-A- 109 675 315
- CN-A- 110 136 236
- US-A1- 2016 086 387
- US-A1- 2019 035 149
- ZENG XIANGYONG ET AL: "A Video Based Personalized Face Model Generation Approach for Network 3D Games", 19 September 2005, ADVANCES IN BIOMETRICS : INTERNATIONAL CONFERENCE, ICB 2007, SEOUL, KOREA, AUGUST 27 - 29, 2007 ; PROCEEDINGS; [LECTURE NOTES IN COMPUTER SCIENCE; LECT.NOTES COMPUTER], SPRINGER, BERLIN, HEIDELBERG, PAGE(S) 230 - 238, ISBN: 978-3-540-74549-5, XP047384755
- ANONYMOUS: "UV mapping - Wikipedia", 30 November 2018 (2018-11-30), pages 1 - 3, XP055929487, Retrieved from the Internet <URL:https://en.wikipedia.org/w/index.php?title=UV_mapping&oldid=871387795> [retrieved on 20220609]
- WANG LIN: "Translation of CN 108 305 309 A", 20 July 2018 (2018-07-20), pages 1 - 19, XP093081860, Retrieved from the Internet <URL:https://worldwide.espacenet.com/patent/search?q=XP093081860> [retrieved on 20230913]
- LARSON LUKE ET AL: "Creating 3D avatars from artistic drawing for VR and games applications", 2016 FUTURE TECHNOLOGIES CONFERENCE (FTC), IEEE, 6 December 2016 (2016-12-06), pages 1094 - 1099, XP033044544, [retrieved on 20170117], DOI: 10.1109/FTC.2016.7821739

## Description

### FIELD

This application relates to the field of virtual modeling, and in particular, to a method and an apparatus for displaying a personalized face of a three-dimensional character, a device, and a storage medium, as recited in the appended claims.

### BACKGROUND

A function for a game user to customize a personalized face of a three-dimensional character is provided in a three-dimensional online game. The face of the three-dimensional character includes a three-dimensional face model and a texture image overlaid on the three-dimensional face model. The personalized customization allows a user to customize the texture image.

In a conventional personalized customization method, three facial parts may be replaceable, that is, an eye, a mouth, and an eyebrow, and each of the facial parts is provided with three candidate patterns. All images representing combinations of candidate patterns are drawn by an art designer in advance. That is, a total of 3 *3 *3=27 texture images are drawn.

When the number of the replaceable facial parts or the candidate patterns is increased, the number of thus drawn texture images increases in multiplies. For example, when a new candidate pattern is added for the mouth part, 1*3*3=9 texture images should be added, which greatly increases the workload for an art designer to draw texture images, and has a problem of high costs of implementing a customized personalized face.

The Patent application US 2016/086387A1 discloses an avatar editing environment that allows users to create custom avatars for use in online games and other applications. Starting with a blank face the user can add, rescale and position different elements (e.g., eyes, nose, mouth) on the blank face. The user can also change the shape of the avatar's face, the avatar's skin color and the color of all the elements. In some implementations, touch input and gestures can be used to manually edit the avatar. Various controls can be used to create the avatar, such as controls for resizing, rotating, positioning, etc. The user can choose between manual and automatic avatar creation. The avatar editing environment can be part of a framework that is available to applications. One or more elements of the avatar can be animated.

The Patent application US 2019/035149A1 provides a method of generating an image file of a personalized 3D head model of a user, the method comprising the steps of: (i) acquiring at least one image of the user's face; (ii) performing automated face landmark recognition based on the at least one image of the user's face; (iii) providing a 3D face geometry reconstruction using a shape prior; (iv) providing texture map generation and interpolation with respect to the 3D face geometry reconstruction to generate a personalized 3D head model of the user, and (v) generating an image file of the personalized 3D head model of the user.

The publication document AENG XIANG YONG ET AL: "A Video Based Personalized Face Model Generation Approach for Network 3D Games" have developed a fast generation system for personalized 3D face model and plan to apply it in network 3D games. This system uses one video camera to capture player's frontal face image for 3D modeling and dose not need calibration and plentiful manual tuning. The 3D face model in games is represented by a 3D geometry mesh and a 2D texture image. The personalized geometry mesh is obtained by deforming an original mesh with the relative positions of the player's facial features, which are automatically detected from the frontal image. The relevant texture image is also obtained from the same image. In order to save storage space and network bandwidth, only the feature data and texture data from each player are sent to the game server and then to other clients. Finally, players can see their own faces in multiplayer games.

CN 108305309 A Patent discloses a method for generating a 3D game character model from a 2D user face image. The system builds a user texture via 3D reconstruction, maps it to a character texture using an encoding map, fuses with the mesh, adjusts skin tone and overlays makeup.

### SUMMARY

A computer-implemented method and an apparatus for displaying a personalized face of a three-dimensional character, a device, and a storage medium are provided as recited in the appended claims.

The computer-implemented method for displaying a personalized face of a three-dimensional character is performed by a computer device, the method includes:
obtaining a texture identifier of a personalized face model of a three-dimensional character,
wherein the personalized face model comprises n target parts, each target part being configured with a UV texture image, the UV texture image comprising at least two candidate pattern textures corresponding to the target part,
wherein a UV texture image corresponding to an ith target part is separately set in an ith UV coordinate system, where n is a positive integer greater than 1, and i is less than or equal to n, each of the plurality of UV texture images comprises at least two candidate pattern textures of the target part, and
wherein the texture identifier is used for identifying a target pattern texture of a target part in the n target parts on the personalized face model, and the texture identifier comprises coordinate offset data and coordinate scaling data;
drawing a basic UV texture image on the personalized face model, the basic UV texture image comprising a texture of a region other than the target part;
determining, based on the texture identifier, the target pattern texture from the at least two candidate pattern textures corresponding to the target part; and
drawing the target pattern texture on a region corresponding to the target part on the personalized face model;
determining the region corresponding to the target part on the personalized face model;
setting a visible region in the ith UV coordinate system onto the target pattern texture in the UV texture image by the coordinate offsetting data and the coordinate scaling data, wherein a start position of the visible region in the ith UV coordinate system is set at a position of the target pattern texture by the coordinate offsetting data and a region size of the visible region in the ith UV coordinate system is set to be equal to a size of the target pattern texture by the coordinate scaling data; and
drawing, on the region corresponding to the target part, the target pattern texture in the visible region;
wherein before the obtaining a texture identifier of a personalized face model of a three-dimensional character, the method further comprises:
   displaying, by a first client, a setting interface of a personalized face of a three-dimensional character, wherein the setting interface comprises a preview picture of a first face model and n setting options;
   receiving, by the first client, a setting operation triggered on a target setting option in the n setting options, wherein the setting operation is used for selecting a target pattern texture from candidate pattern textures corresponding to the target setting option;
   generating, by the first client, a texture identifier corresponding to the target pattern texture based on the setting operation;
   reporting, by the first client, the texture identifier to a server;
   receiving and storing the texture identifier by the server; and
   transmitting, by the server, the texture identifier of the personalized face model of the three-dimensional character to at least one of the first client and a second client.

The apparatus for displaying a personalized face of a three-dimensional character includes: an obtaining module, configured to obtain a texture identifier of a personalized face model of a three-dimensional character, wherein the personalized face model comprises n target parts, each target part being configured with a UV texture image, the UV texture image comprising at least two candidate pattern textures corresponding to the target part, wherein a UV texture image corresponding to an ith target part is separately set in an ith UV coordinate system, where n is a positive integer greater than 1, and i is less than or equal to n, each of the plurality of UV texture images comprises at least two candidate pattern textures of the target part, and wherein the texture identifier is used for identifying a target pattern texture of a target part in the n target parts on the personalized face model, and the texture identifier comprises coordinate offset data and coordinate scaling data; a drawing module, configured to draw a basic UV texture image on the personalized face model, the basic UV texture image comprising a texture of a region other than the target part; and a determining module, configured to determine, based on the texture identifier, the target pattern texture from the at least two candidate pattern textures corresponding to the target part, wherein the drawing module is further configured to draw the target pattern texture on a region corresponding to the target part on the personalized face model, the apparatus further comprises a calculating module, wherein the determining module is further configured to determine the region corresponding to the target part on the personalized face model; the calculating module is configured to set a visible region in the ith UV coordinate system onto the target pattern texture in the UV texture image by coordinate offsetting and coordinate scaling, wherein a start position of the visible region in the ith UV coordinate system is set at a position of the target pattern texture by the coordinate offsetting data and a region size of the visible region in the ith UV coordinate system is set to be equal to a size of the target pattern texture by the coordinate scaling data; and the drawing module is further configured to draw, on the region corresponding to the target part, the target pattern texture in the visible region; a first client, configured to display a setting interface of a personalized face of a three-dimensional character, wherein the setting interface comprises a preview picture of a first face model and n setting options; the first client is further configured to receive a setting operation triggered on a target setting option in the n setting options, wherein the setting operation is used for selecting a target pattern texture from candidate pattern textures corresponding to the target setting option; the first client is further configured to generate a texture identifier corresponding to the target pattern texture based on the setting operation; and report the texture identifier to a server; and the server is configured to receive and store the texture identifier and transmit the texture identifier of the personalized face model of the three-dimensional character to at least one of the first client and a second client. A computer device is further provided, which includes a processor and a memory. The memory stores computer-readable instructions, the computer-readable instructions, when loaded and executed by the processor, performs steps of the method for displaying a personalized face of a three-dimensional character.

A computer-readable storage medium is further provided, which stores computer-readable instructions, the computer-readable instructions, when loaded and executed by a processor, performs steps of the method for displaying a personalized face of a three-dimensional character.

Details of one or more embodiments of this application are provided in the drawings and descriptions below. Other features, objectives, and advantages of this application become apparent from the specification, the drawings, and the claims.

### BRIEF DESCRIPTION OF THE DRAWINGS

To describe the technical solutions in the embodiments of this application more clearly, the drawings for describing the embodiments are briefly described hereinafter. Apparently, the drawings in the following description show merely some embodiments of this application, and a person of ordinary skill in the art may obtain other drawings according to these drawings without creative efforts.
FIG. 1 is a diagram of an implementation environment of a method for displaying a personalized face of a three-dimensional character according to an exemplary embodiment of this application.
FIG. 2 is a schematic diagram of a method for displaying a personalized face of a three-dimensional character according to an exemplary embodiment of this application.
FIG. 3 is a flowchart of a method for displaying a personalized face of a three-dimensional character according to another exemplary embodiment of this application.
FIG. 4 is a schematic diagram of a terminal interface when performing a method for displaying a personalized face of a three-dimensional character according to an exemplary embodiment of this application.
FIG. 5 is a schematic diagram of a terminal interface when performing a method for displaying a personalized face of a three-dimensional character according to another exemplary embodiment of this application.
FIG. 6 is a flowchart of a method for displaying a personalized face of a three-dimensional character according to another exemplary embodiment of this application.
FIG. 7 is a diagram showing comparison of frames per second when performing a method for displaying a personalized face of a three-dimensional character according to an exemplary embodiment of this application.
FIG. 8 is a schematic diagram of a personalized face pattern when performing a method for displaying a personalized face of a three-dimensional character according to an exemplary embodiment of this application.
FIG. 9 is a schematic diagram of an interface when performing a method for displaying a personalized face of a three-dimensional character according to another exemplary embodiment of this application.
FIG. 10 is a schematic diagram of an interface when performing a method for displaying a personalized face of a three-dimensional character according to another exemplary embodiment of this application.
FIG. 11 is a schematic diagram of an interface when performing a method for displaying a personalized face of a three-dimensional character according to another exemplary embodiment of this application.
FIG. 12 is a schematic diagram of an interface when performing a method for displaying a personalized face of a three-dimensional character according to another exemplary embodiment of this application.
FIG. 13 is a flowchart of a method for displaying a personalized face of a three-dimensional character according to another exemplary embodiment of this application.
FIG. 14 is a block diagram of an apparatus for displaying a personalized face model of a three-dimensional character according to an embodiment of this application.
FIG. 15 is a structural block diagram of a server according to an embodiment of this application.

### DESCRIPTION OF EMBODIMENTS

To make the objectives, technical solutions, and advantages of this application clearer, embodiments of this application are described in detail with reference to the drawings hereinafter.

First, several terms used in the embodiments of this application are briefly described in the following.

A virtual environment is displayed (or provided) when an application is run on a terminal. The virtual environment may be a simulated environment of the real world, or may be a semi-simulated semi-fictional three-dimensional environment, or may be an entirely fictional three-dimensional environment. The virtual environment may be any one of a two-dimensional virtual environment, a 2.5-dimensional virtual environment, and a three-dimensional virtual environment. Descriptions are made by using an example in which the virtual environment is a three-dimensional virtual environment in the following embodiments, but this is not limited. In addition, the virtual environment is further used for a virtual environment battle between at least two three-dimensional characters.

A three-dimensional character is a movable object in a virtual environment. The movable object may be at least one of a virtual person, a virtual animal, and an animation character. Further, in a case that the virtual environment is a three-dimensional virtual environment, the three-dimensional character is a three-dimensional model created by using a skeletal animation technology. Each three-dimensional character has a shape and a volume in the three-dimensional virtual environment, and occupies a part of the space in the three-dimensional virtual environment.

A face model is a model of a face of a three-dimensional character. The face model is provided with a drawn texture image, and different parts of the same face model may be configured with various candidate pattern textures.

UV coordinate is the abbreviated form of u and v texture mapping coordinates (which are similar to x, y, and z axes in a spatial model). The u and v texture mapping coordinates define position information of all points on a candidate pattern texture. These points are related to a three-dimensional model and used for determining the position of the candidate pattern texture on the three-dimensional model.

Unfold UV represents an operation of display each vertex in a three-dimensional model into a two-dimensional plane coordinate system, to facilitate drawing of the three-dimensional model in the two-dimensional coordinate system.

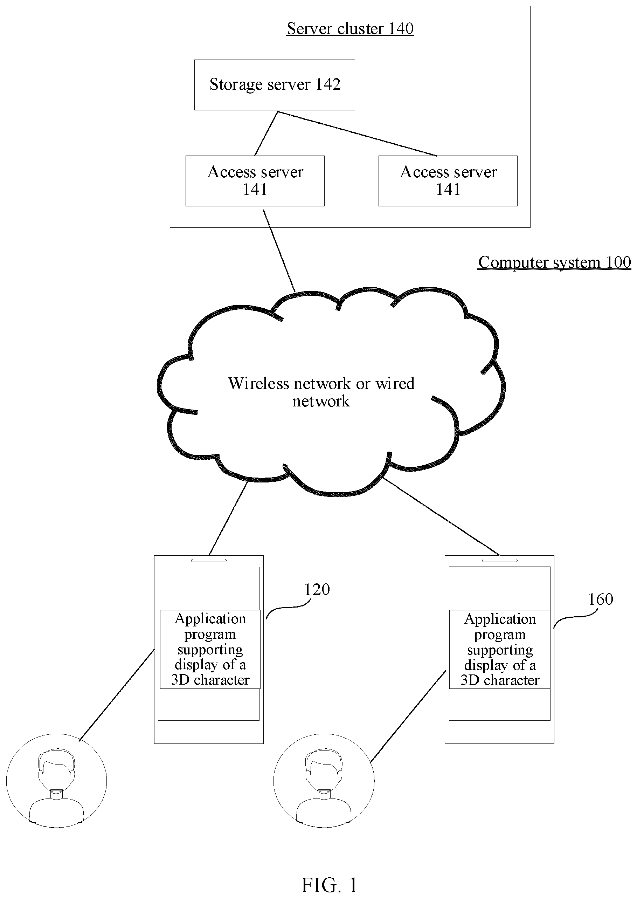

FIG. 1 is a structural block diagram of a computer system 100 according to some embodiments of this application. The computer system 100 provides a sharing three-dimensional virtual environment, and the three-dimensional virtual environment includes multiple three-dimensional characters. The computer system 100 includes a first terminal 120, a server cluster 140, and a second terminal 160.

The first terminal 120 is connected to the server cluster 140 via a wireless network or wired network. The first terminal 120 may be at least one of a smart phone, a game console, a desktop computer, a tablet computer, an e-book reader, and a laptop portable computer. A first client is installed and run on the first terminal 120. The first client is provided with a three-dimensional virtual environment, and the three-dimensional virtual environment includes multiple three-dimensional characters. As an example in this embodiment, the first client may be any one of a three-dimensional game application program, an image processing program, an avatar generation program, an expression management program, and a game-related program. Schematically, the first client is a client used by a first user, and a first user account is logged in to the first client. The first user account has a control permission of a first three-dimensional character, and a face model of the first three-dimensional character supports personalized customization.

The first terminal 120 is connected to the server cluster 140 via a wireless network or wired network.

The server cluster 140 includes at least one of one server, multiple servers, a cloud computing platform, and a virtualization center. The server cluster 140 is configured to provide a backend service for the first terminal 120 and the second terminal 160. Optionally, the server cluster 140 is responsible for primary computing work, and the first terminal 120 and the second terminal 160 are responsible for secondary computing work. Alternatively, the server cluster 140 is responsible for secondary computing work, and the first terminal 120 and the second terminal 160 are responsible for primary computing work. Alternatively, the server cluster 140, the first terminal 120, and the second terminal 160 perform collaborative computation by using a distributed computing architecture.

In some embodiments, the server cluster 140 includes an access server 141 and a storage server 142. The access server 141 is configured to provide an access service for the first terminal 120 and the second terminal 140. The storage server 142 is configured to receive a texture identifier of the first three-dimensional character transmitted by the first terminal 120.

A second client is installed and run on the second terminal 160. The application program may be a three-dimensional game application program. The second terminal 160 is a client used by a second user. The second client is provided with a three-dimensional virtual environment, and the three-dimensional virtual environment includes multiple three-dimensional characters. As an example of this embodiment of this application, the second client may be a three-dimensional game application program. Schematically, the second client is a client used by the second user, and a second user account is logged in to the second client. The second user account has a control permission of a second three-dimensional character, and a face model of the second three-dimensional character supports personalized customization.

The first terminal 120 may be generally one of multiple terminals, and the second terminal 160 may be generally one of multiple terminals. In this embodiment, the first terminal 120 and the second terminal 160 are used as examples for description. The first terminal 120 and the second terminal 160 are the same terminal type or different terminal types. The terminal type includes at least one of a smart phone, a game console, a desktop computer, a tablet computer, an e-book reader, an MP3 player, an MP4 player, and a laptop computer. The following embodiments are described by using an example in which at least one of the first terminal 120 and the second terminal 140 is a smart phone, and the first user account and the second user account are logged for the same three-dimensional virtual environment.

A person skilled in the art may understand that, the number of the foregoing terminals (or clients) is not limited herein. For example, there may be only one terminal, or there may be dozens of or hundreds of or more terminals. In this case, the computer system further includes another terminal. The number and device types of other terminals are not limited in the embodiments of this application.

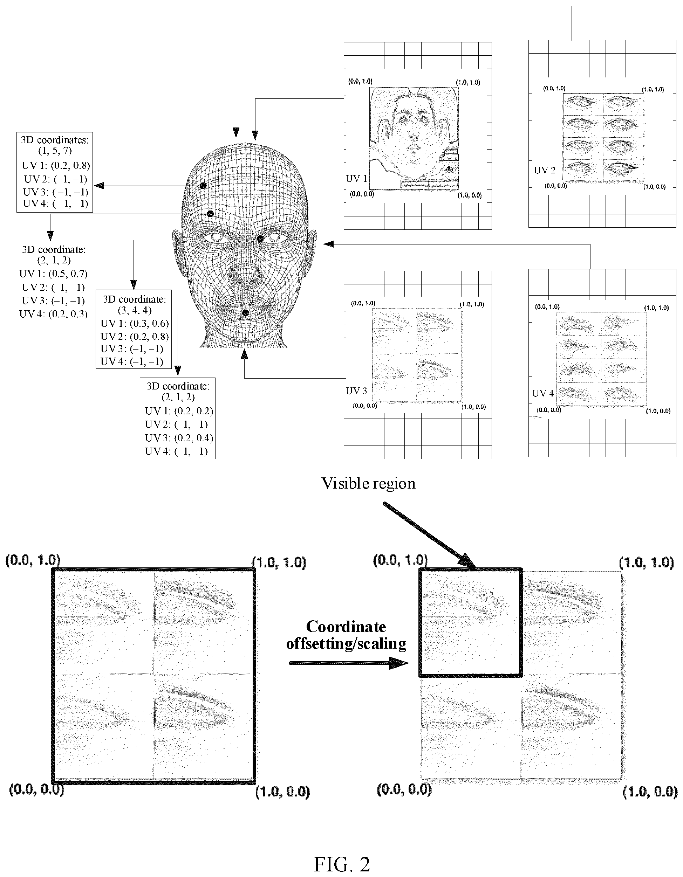

A solution of displaying a personalized face of a three-dimensional character is provided in this application. FIG. 2 is a schematic diagram of the principle of a method for displaying a personalized face of a three-dimensional character according to an exemplary embodiment.

A personalized face model includes multiple vertexes. Each vertex may correspond to coordinate information of multiple different UV coordinate systems. Textures of each vertex in different UV coordinate systems are determined based on the coordinate information. Target pattern textures in different UV coordinate systems are mapped to the face model successively in sequence based on the coordinate information of each vertex, to form a personalized face including multiple textures.

Schematically, with reference to FIG. 2, this solution is described by using an example in which a drawn personalized face includes three target parts, that is, an eye, a mouth, and an eyebrow. The face model includes multiple vertexes. Representative vertexes are selected for different parts of the face model in FIG. 2. Positions of the vertexes on the face model include a forehead, an eyebrow, an eye, and a mouth from top to bottom. The eyebrow, the eye, and the mouth are target parts. Regions including the forehead other than the target parts are non-target parts. Textures of non-target parts are drawn in one UV coordinate system, and each target part is drawn in a UV coordinate system separately. For example, textures of the non-target parts (basic UV texture images) are drawn in a first UV coordinate system (UV1); multiple candidate pattern textures of a target part of the eye are drawn in a second UV texture coordinate system (UV 2); multiple candidate pattern textures of a target part of the mouth are drawn in a third UV texture coordinate system (UV 3); and multiple candidate pattern textures of a target part of the eyebrow are drawn in a fourth UV texture coordinate system (UV 4).

Each vertex on the face model includes multiple groups of UV coordinate information. For example, with reference to FIG. 2, coordinate information included in a vertex at the forehead includes that the vertex has a coordinate of (1, 5, 7) in the three-dimensional coordinate system, a coordinate of (0.2, 0.8) in the UV 1, a coordinate of (-1, -1) in the UV 2, a coordinate of (-1, -1) in the UV 3, and a coordinate of (-1, -1) in the UV 4.

Coordinate information included in a vertex at the eye includes that the vertex has a coordinate of (3, 4, 4) in the three-dimensional coordinate system, a coordinate of (0.3, 0.6) in the UV 1, a coordinate of (0.2, 0.8) in the UV2, a coordinate of (-1, -1) in the UV3, and a coordinate of (-1, -1) in the UV4.

Coordinate information included in a vertex at the mouth includes that the vertex has a coordinate of (2, 1, 2) in the three-dimensional coordinate system, a coordinate of (0.2, 0.2) in the UV 1, a coordinate of (-1, -1) in the UV 2, a coordinate of (0.2, 0.4) in the UV3, and a coordinate of (-1, -1) in the UV4.

Coordinate information included in a vertex at the eyebrow includes that the vertex has a coordinate of (2, 1, 2) in the three-dimensional coordinate system, a coordinate of (0.5, 0.7) in the UV 1, a coordinate of (-1, -1) in the UV 2, a coordinate of (-1, -1) in the UV 3, and a coordinate of (0.2, 0.3) in the UV 4.

After receiving a texture identifier, the second client determines a target pattern texture based on the texture identifier, and draws the face model based on the coordinate information of the vertexes.

For example, the second client may draw the face model in the following way. The second client determines coordinate information of each vertex on the face model corresponding to UV 1, and maps the basic UV texture image in the UV 1 to the face model based on the coordinate information. Optionally, the basic UV texture image may or may not include texture information at the target parts. After the basic UV texture image in the UV 1 is mapped to the face model, the second client respectively maps target pattern textures in the UV 2, UV 3, and UV 4 to the corresponding target parts of the face model. It is to be noted that because the target pattern textures are drawn only on the target parts of the face model, the order of drawing for the target parts is not limited. When the basic UV texture images include textures of the target parts, it is required to draw the basic UV texture images first, and draw the target pattern texture. If the basic UV texture images do not include the textures of the target parts, the order of drawing for the UV 1, UV 2, UV 3, and UV 4 is not limited.

Because the target pattern texture of each target part is drawn separately in one UV coordinate system, during drawing of the target pattern texture in the coordinate system, coordinate information of the vertexes in the UV coordinate system outside the target part may be set to be negative. In this case, the second client can ensure that the target pattern texture is drawn on the target part by only drawing the target texture information onto a region with positive coordinate information.

Optionally, the texture identifier includes at least one of coordinate offset data or coordinate scaling data. With reference to FIG. 2, a visible region is included in a UV coordinate system in which the candidate pattern texture is located. The coordinate offset data is used for changing a start position of the visible region, and the coordinate scaling data is used for changing the size of a visible range. After the visible range is determined based on the texture identifier, the second client maps a target pattern texture in the visible range to the target part to change a local texture of the face model. For example, when the application program is developed based on a Unity engine, the start position of the visible range may be modified by modifying a parameter corresponding to "offset", and the size of the visible range may be modified by modifying a parameter corresponding to "liting".

It is to be noted that theoretically, the target part may be any part of the three-dimensional character, and the target part is not limited to the above listed parts.

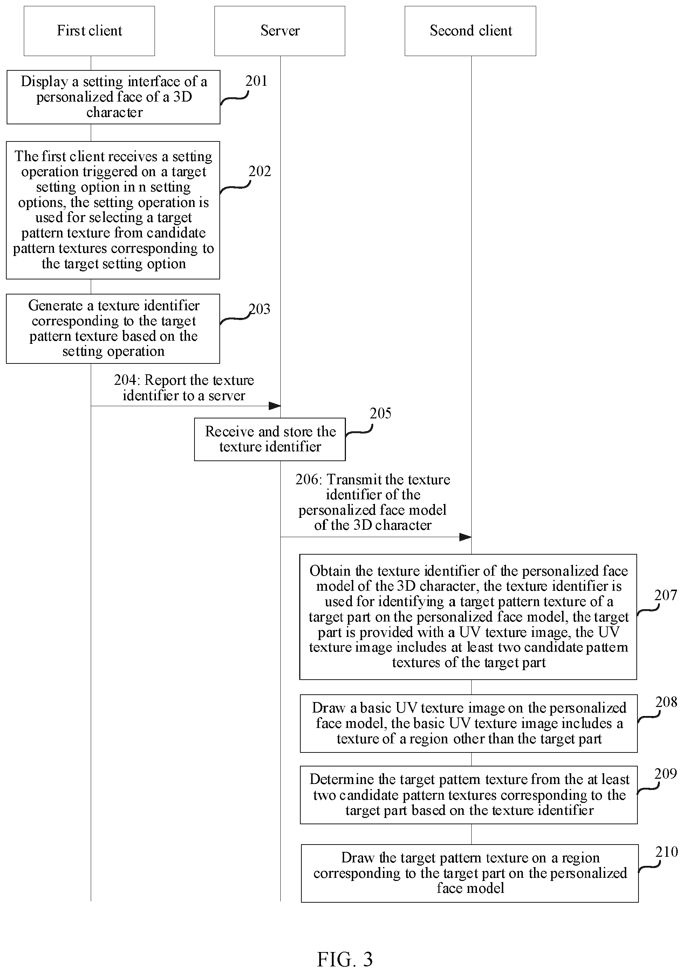

FIG. 3 is a flowchart of a method for displaying a personalized face of a three-dimensional character according to an exemplary embodiment. The method includes the following steps S201 to S210.

In Step 201, the first client displays a setting interface of a personalized face of a three-dimensional character.

The setting interface includes a preview picture of a first face model and n setting options.

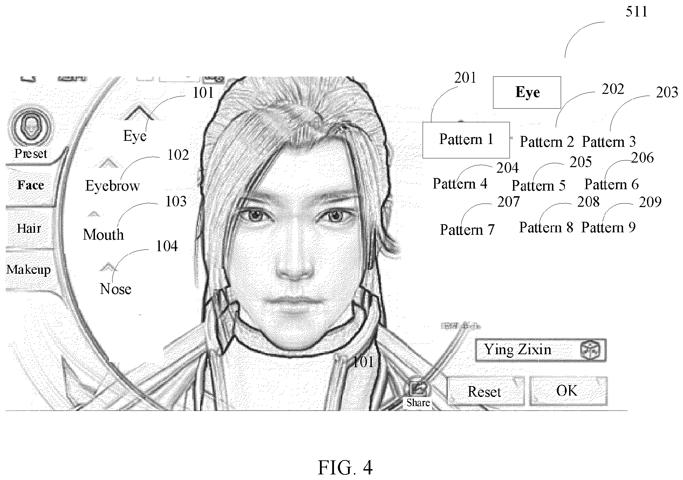

Schematically, reference is made to FIG. 4, which is a diagram of a setting interface of a face of a three-dimensional character X displayed on a first client in an embodiment of this application. A personalized customization picture and setting options of the three-dimensional character X are presented on the setting interface. The setting options include at least one of an eye setting option 101, an eyebrow setting option 102, a mouth setting option 103, or a nose setting option 104. Each setting option includes multiple candidate pattern textures for setting the setting option. For example, the eye setting option includes multiple candidate pattern textures respectively for pattern 1, pattern 2, pattern 3, ..., pattern 8, and pattern 9. The pattern 1 to the pattern 9 are shown by reference numbers 201 to 209 in FIG. 4.

The personalized face model is implemented by modifying a local texture of at least one of the setting options.

In Step 202, the first client receives a setting operation triggered on a target setting option in the n setting options, the setting operation is used for selecting a target pattern texture from candidate pattern textures corresponding to the target setting option.

Specifically, the first client may detect a setting operation performed on the target setting option in the n setting options, and determine a candidate pattern texture selected by the setting operation of the corresponding target setting option. The selected candidate pattern texture is the target pattern texture. Further, the first client records a texture identifier corresponding to the target pattern texture in real time, and adjusts, based on the texture identifier, an effect of the three-dimensional character X presented on the setting interface in real time.

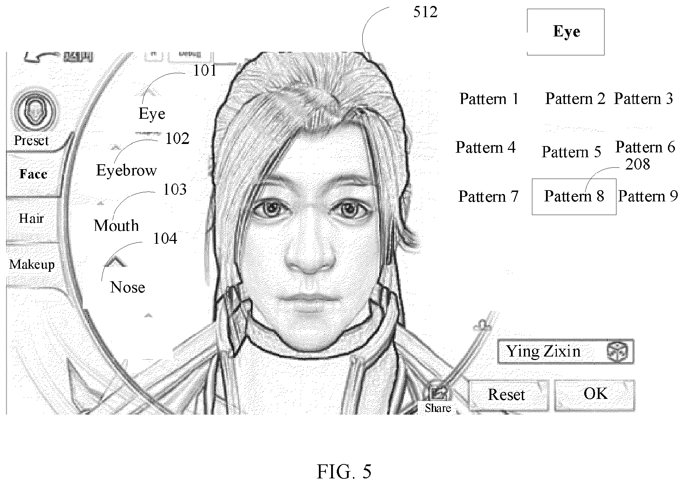

FIG. 5 is a schematic diagram of an interface presented by the first client after receiving the setting operation in this embodiment. The user selects the pattern 8 from the candidate pattern textures in the eye setting option 101, that is, a pattern represented by 208 in FIG. 5. Compared with an image shown in FIG. 4 when the three-dimensional character X is in an initial state, the eye region of the three-dimensional character X changes significantly after a setting of personalized customization. That is, the eye region of the three-dimensional character X changes to have the selected target pattern texture.

In some embodiments, the setting operation received by the first client may be performed on at least one of the eye setting option 101, the eyebrow setting option 102, the mouth setting option 103, and the nose setting option 104. At least one candidate pattern texture is included in each setting option for the user to select.

In Step 203, the first client generates a texture identifier corresponding to the target pattern texture based on the setting operation.

After performing the setting of the personalized face, the user triggers a determining option. After receiving an operation of triggering the determining option, the first client generates the texture identifier based on current face data of the three-dimensional character X. The texture identifier is used for identifying a target pattern texture of a target part in the first face model.

The target part is a part that may be modified through a personalized setting function. For example, the target part may include a part such as an eye, an eyebrow, or a mouth. The target pattern texture indicates various optional textures corresponding to a target part.

It is to be noted that, theoretically, the target part may be any part of the three-dimensional character, and the target part is not limited to the above listed parts.

In Step 204, the first client reports the texture identifier to a server.

The texture identifier is used as a basis for changing the personalized face model of the three-dimensional character and is used for determining a corresponding target part and target pattern texture on a second client, so as to set an appearance of the three-dimensional character in a personalized way.

In Step 205, the server receives and stores the texture identifier.

After receiving the texture identifier of the first face model uploaded by the first client, the server stores the texture identifier in the server.

**Table 1**

| | | |
|---|---|---|
| First client | Texture identifier of a first three-dimensional character | Eye and pattern 8 |
| | | Nose and pattern 2 |
| Second client | Texture identifier of a second three-dimensional character | Eye and pattern 3 |
| | | Mouth and pattern 5 |
| Third client | Texture identifier of a third three-dimensional character | Eyebrow and pattern 7 |

Referring to table 1, the server stores a texture identifier of the three-dimensional character X from at least one client and may transmit a texture identifier of any three-dimensional character to any client. Optionally, when the three-dimensional character X enters a field of view of a three-dimensional character Y, the server transmits the texture identifier of the three-dimensional character X to a client corresponding to the three-dimensional character Y. Schematically, the server may simultaneously store texture identifiers of different target parts corresponding to multiple clients.

In Step 206, the server transmits the texture identifier of the personalized face model of the three-dimensional character to at least one of the first client and the second client.

Schematically, when the three-dimensional character X enters a field of view of the second client, the server transmits the texture identifier of the three-dimensional character X to the second client. Optionally, there may be one or more second clients.

When the first client corresponding to the three-dimensional character X is to display the three-dimensional character X, the server transmits the texture identifier of the three-dimensional character X to the first client. For example, when the three-dimensional character X is within a field of view of the first client, or the user triggers a setting interface including an image of the three-dimensional character X on the first client, the server transmits the texture identifier of the three-dimensional character X to the first client, to enable the first client to determine the corresponding target part and target pattern texture based on the texture identifier, and display a personalized face model formed by personalized customization.

Descriptions are made below mainly by using an example in which the second client displays the personalized face model of the three-dimensional character. For a process in which the first client displays the personalized face model of the three-dimensional character, the principle is the same as or similar to that of the second client, and details are not repeated herein.

In Step 207, the second client obtains the texture identifier of the personalized face model of the three-dimensional character, the texture identifier is used for identifying a target pattern texture of a target part on the personalized face model, the target part is provided with a UV texture image, the UV texture image includes at least two candidate pattern textures corresponding to the target part.

There are at least two candidate pattern textures for each target part on the personalized face model. After the user selects one of the at least two candidate pattern textures, a texture identifier corresponding to the target pattern texture is generated. The second client can accurately determine the target pattern texture after receiving the texture identifier.

In Step 208, the second client draws a basic UV texture image on the personalized face model, the basic UV texture image includes a texture of a region other than the target part.

The purpose of drawing the basic UV texture image on the personalized face model is to provide a texture for a non-target part on the personalized face model. During drawing of the basic UV texture image, the target part may be drawn based on a default texture, which is replaced or overwritten when drawing for the target part subsequently. Alternatively, only the region outside the target part may be drawn, and the target pattern texture is drawn on the region in which the target part is located when drawing for the target part subsequently.

In Step 209, the second client determines the target pattern texture from the at least two candidate pattern textures corresponding to the target part based on the texture identifier.

The texture identifier is used for identifying the target pattern texture of the target part on the personalized face model, and the texture identifier includes at least an identifier corresponding to the target pattern texture.

Optionally, the identifier may include a coordinate range in a coordinate system in which the target pattern texture is located, or may include at least one of coordinate offset data and coordinate scaling data of each pixel in the coordinate system in which the target pattern texture is located.

In Step 210, the second client draws the target pattern texture on a region corresponding to the target part on the personalized face model.

After determining each target part based on the texture identifier, the second client maps the target pattern texture to a corresponding region on the face model to obtain a personalized face.

Based on the above, according to the method provided by this embodiment, at least two candidate pattern textures are drawn for each target part in advance. After receiving the texture identifier, the second client determines the target pattern texture from multiple candidate pattern textures based on the texture identifier, and draws the target pattern texture on the target part on the personalized face model. A personalized face model is implemented through various combinations of the target textures without drawing all possible personalized face models based on the candidate pattern textures, such that the workload for an art designer to draw texture images is reduced, which greatly reduces costs of implementing a customized personalized face of a three-dimensional model, and avoids a problem of excessively large program package and excessively large memory usage of an application program.

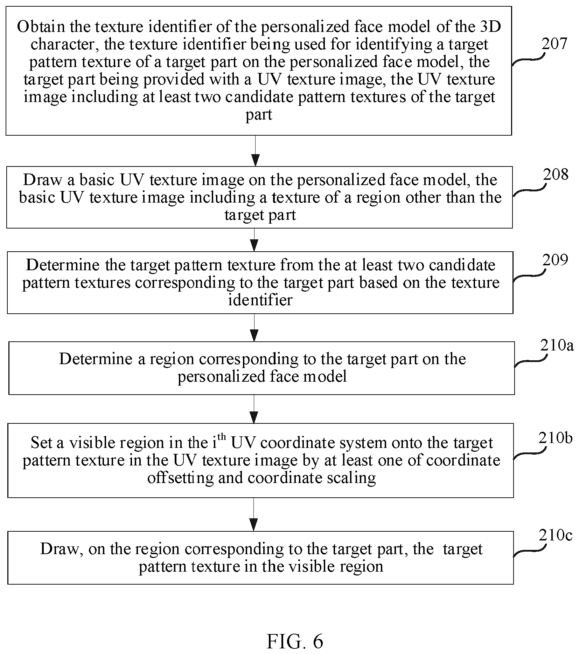

In some embodiments, the personalized face model includes n target parts, and a UV texture image corresponding to an i^{th} target part is set in an i^{th} UV coordinate system, where n is a positive integer greater than 1, and i is less than or equal to n. As shown in FIG. 6, step 210 may be replaced by and implemented as the following steps S210a to S210c.

In Step 210a, the second client determines a region corresponding to the target part on the personalized face model.

The personalized face model includes n target parts, and a UV texture image corresponding to an i^{th} target part is set in an i^{th} UV coordinate system. The target pattern texture is drawn on the region corresponding to the target part on the personalized face model. For example, the personalized face model includes three target parts including an eye, a mouth, and an eyebrow. Each target part corresponds to a UV coordinate system, and all candidate pattern textures of the target part are drawn in the UV coordinate system corresponding to the target part.

The face model has multiple vertexes, and each vertex includes coordinate information. The coordinate information corresponds to positions of the vertex in multiple coordinate systems. In some embodiments, when drawing the eye region, the second client acquires coordinate information of a coordinate system in which the target pattern texture of the eye is located in each vertex on the face model, and draws the target pattern texture on the target part.

Because the target pattern texture of each target part is drawn separately in a UV coordinate system, during drawing of the target pattern texture in the coordinate system, coordinate information of the vertexes in the UV coordinate system outside the target part may be set to be negative. In this case, the second client can ensure that the target pattern texture is drawn on the target part by only drawing the target texture information on a region with positive coordinate information.

Schematically, the second client obtains a UV coordinate of a vertex on the personalized face model in the i^{th} UV coordinate system, the UV coordinate includes a U coordinate and a V coordinate. The second client determines a region in which a vertex with a U coordinate greater than or equal to 0 is located as the region corresponding to the target part, or determines a region in which a vertex with a V coordinate greater than or equal to 0 is located as the region corresponding to the target part. Because coordinate value that correspond to a vertex in the target region are set to positive, the second client can determine a region of the vertex in the target part by only determining that a U coordinate or a V coordinate of the vertex is positive, thereby effectively reducing determining steps for the second client, thus improving the performance of a device.

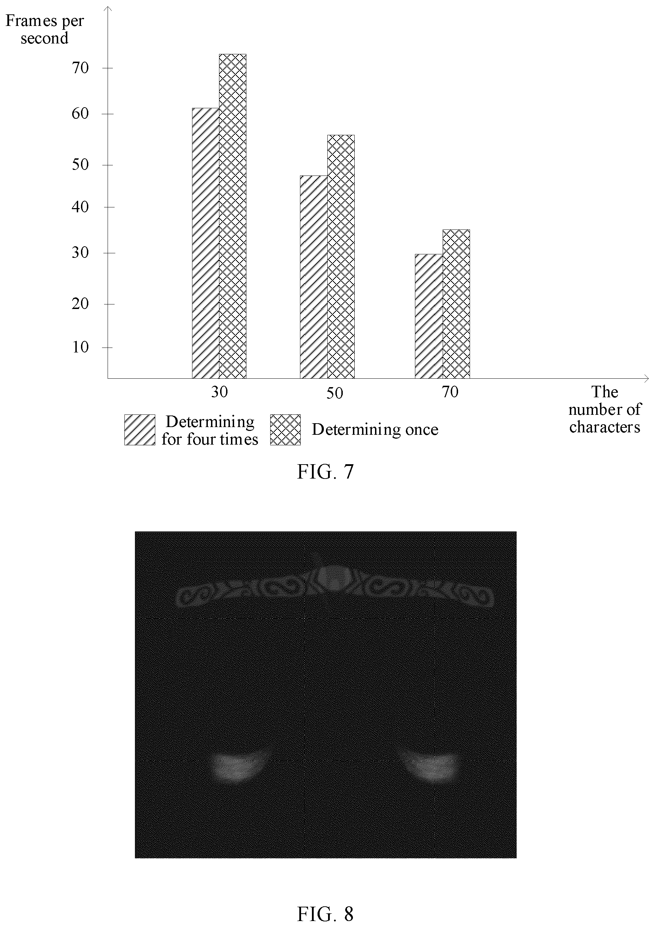

Reference is made to FIG. 7, which is a schematic diagram showing an effect of a manner in which a client determines a coordinate range of a vertex on the performance according to some embodiments of this application. The horizontal ordinate in FIG. 7 represents the number of three-dimensional characters, and the vertical ordinate represents the frames per second. It can be seen from FIG. 7 that, when the number of three-dimensional characters is 30, the frames per second of a device for determining a vertex coordinate once is over 70, and the frames per second of a device for determining a vertex coordinate for four times is about 60; when the number of three-dimensional characters is 50, the frames per second of a device for determining a vertex coordinate once is about 70, and the frames per second of a device for determining a vertex coordinate for four times is about 50; and when the number of three-dimensional characters is 70, the frames per second of a device for determining a vertex coordinate once is about 40, and the frames per second of a device for determining a vertex coordinate for four times is about 30. It can be seen that, setting the UV coordinate corresponding to a vertex of a non-target part to be negative allows the second client to determine whether the vertex is located in the target part by determining whether the UV coordinate is negative or positive, so that the frames per second of a device can be effectively improved.

In Step 210b, the second client sets a visible region in the i^{th} UV coordinate system on the target pattern texture in the UV texture image by at least one of coordinate offsetting and coordinate scaling.

The second client sets a start position of the visible region in the i^{th} UV coordinate system at a position of the target pattern texture by coordinate offsetting, and sets a region size of the visible region in the i^{th} UV coordinate system to be equal to a size of the target pattern texture by coordinate scaling.

Optionally, the texture identifier includes at least one of coordinate offset data or coordinate scaling data. The visible region is included in a UV coordinate system in which the candidate pattern texture is located. The second client draws the texture in the visible region on the personalized face model. The coordinate offset data is used for changing the start position of the visible region, and the coordinate scaling data is used for changing the size of a visible range. After the visible range is determined based on the texture identifier, the second client maps a target pattern texture in the visible range to the target part to change a local texture of the face model. For example, when the application program is developed based on a Unity engine, the start position of the visible range may be modified by modifying a parameter corresponding to "offset", and the size of the visible range may be modified by modifying a parameter corresponding to "liting". Because an effective range of the UV coordinate is within a range enclosed by (0, 0), (1, 0), (1, 1), and (0, 1), when the second client samples each point in the UV coordinate system, according to at least one of coordinate offset data and coordinate scaling data in the texture, a region in which the target pattern texture is located is determined as a final sampling range.

Based on the above, multiple candidate pattern textures of the target part are drawn in one UV coordinate system, and ranges of different candidate pattern textures in the UV coordinate system are selected based on the texture identifiers, thereby effectively reducing the workload for a technician to map the target pattern texture to the target part.

In Step 210c, the second client draws, on the region corresponding to the target part, a target pattern texture in the visible region.

The second client obtains a coordinate mapping relationship, the coordinate mapping relationship includes a mapping relationship between a texture coordinate of the target pattern texture and a vertex of the target part. The second client draws, based on the coordinate mapping relationship, the target pattern texture in the visible region onto the region corresponding to the target part on the personalized face model.

Based on the above, according to the method provided by this embodiment, candidate pattern textures of multiple target parts are drawn in different UV coordinate systems, and the second client maps the target pattern textures in different coordinate systems to the target regions on the face model one by one when drawing the personalized face, thereby effectively reducing the workload of an art designer and reducing occupied memory space of a device corresponding to the second client. In addition, the target region needs to be determined only once, which can effectively improve the performance of the device.

In some embodiments, a pupil of the three-dimensional character is set on the basic UV texture image. With reference to the foregoing embodiment, because the basic UV texture image is set in the UV 1, there is no need to set a UV coordinate system for the pupil separately when it is only required to change a color of the pupil region without changing a shape of the pupil, it is only required to identify an eyeball by using a single channel on the basic UV texture image. In this case, the second client can change the color of the pupil by changing pixel weight blending of the eyeball part. Schematically, the channel may be any one of a r-channel, a g-channel, and a b-channel.

A designated color channel of the basic UV texture image includes first position identification information of a first part, and the part may be a pupil, the forehead, a cheek, or the like. After receiving the texture identifier, the second client obtains a color identifier of the first part from the basic UV texture image, determines a pixel corresponding to the first part based on the first position identification information in the designated color channel, and changes color of the pixel corresponding to the first part based on the color identifier to change the color of the pupil.

The local color in the basic UV texture image may be changed by using the b-channel by using code in the following Table 2.

**Table 2**

| |
|---|
| fixed3 Mask =2D(_MaskTex, In.UV_MainTex).rgb |
| baseColor.rgb = _EyeBallColor*mask.b + baseColor.rgb |

Similarly, the designated color channel in the basic UV texture image includes identification information of a second part, and the part may be a pupil, the forehead, a cheek, or the like. After obtaining a pattern identifier of the second part, the second client determines a pixel corresponding to the second part based on the second position identification information in the designated color channel, and changes a color of the pixel corresponding to the second part based on color matching information corresponding to the pattern identifier, so as to change the pattern of the personalized face.

The local color in the basic UV texture image may be changed by using code in the following Table 3.

**Table 3**

| |
|---|
| fixed3 tattooColor = tex2D(_TattooTex,float2(IN.UV_MainTex.x/_TattooTexSize + _TattooTexUoffSet,IN.UV_MainTex.y/_TattooTexSize + _TattooTexVoffSett)).rgb; |
| baseColor.rgb = lerp(baseColor.rgb, _tattooColor,dot(tattooColor,_tattooColor)); |

Based on the above, in this embodiment, the pattern and color of the personalized face are determined by changing the local color of the basic UV texture image without adding a UV coordinate system, thereby reducing the load of the device corresponding to the second client.

FIG. 8 shows a pattern effect diagram generated by changing pixel weight blending of the eyeball part and the forehead part on the basic UV texture image. It can be seen from FIG. 8 that the colors of the forehead region and the eye region on the basic UV texture image are changed.

In some embodiments, because the left and right eyes of the three-dimensional character are exactly the same, an art designer draws only one eye in a UV coordinate system corresponding to the target part of the eye, and draws the target pattern texture on a target part corresponding to the other eye by at least one of coordinate offsetting or coordinate scaling. In this way, to perform switching for the two eyes. Similarly, only half of a target pattern texture of the mouth may be drawn, and the other half of the target pattern texture is drawn on the target part of the face model by at least one of coordinate offsetting and coordinate scaling. In this way, the workload of the art designer can be effectively reduced.

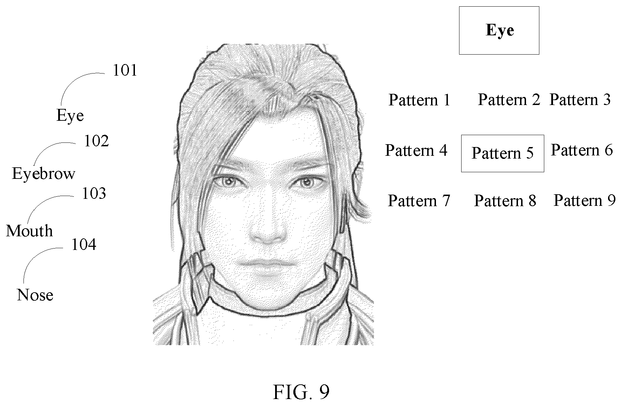

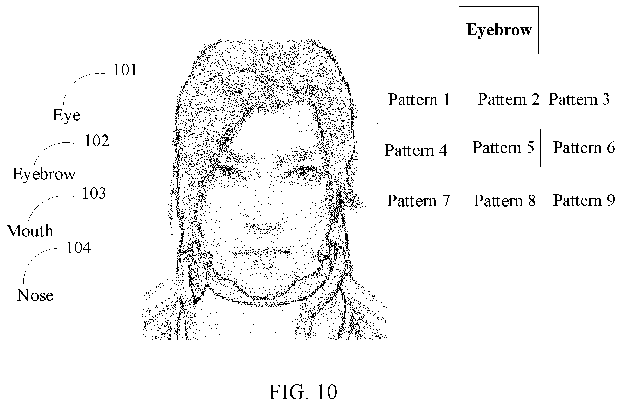

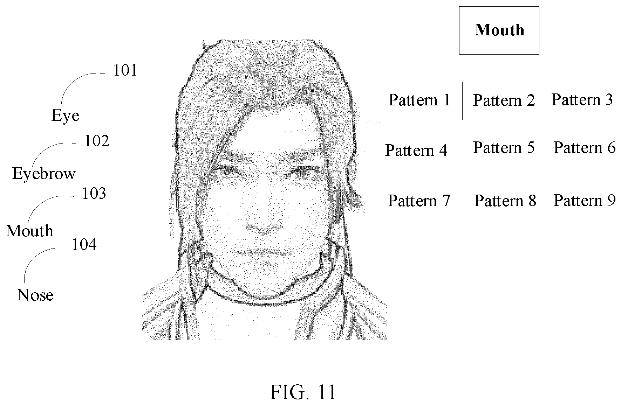

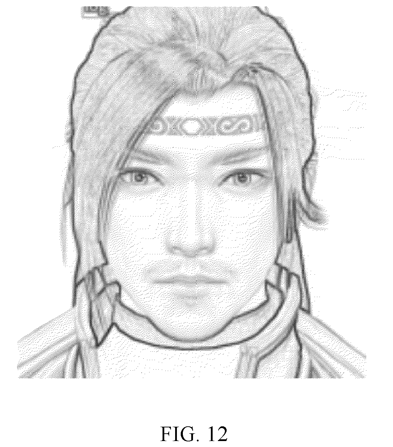

An interface effect of the personalized face in the foregoing embodiment is described with reference to FIG. 4, and FIG. 9 to FIG. 12. FIG. 4 is a schematic interface diagram of an initial face of a three-dimensional character in a setting interface. After the pattern 5 of the eye option 101 is selected, the eye part of the three-dimensional character is changed. The personalized face after the changing is as shown in FIG. 9. It can be seen that, other parts of the three-dimensional character are not changed, and only the eye part is switched to the state of the pattern 5. A pattern texture is further selected from the eyebrow option 102. After the pattern 6 is selected, other parts of the three-dimensional character are not changed, and only the eyebrow part is switched to the state of the pattern 6. It can be seen from FIG. 10 that a width of the eyebrow becomes narrower. A pattern texture is further selected for the mouth from the mouth option. After the pattern 2 is selected, other parts of the three-dimensional character are not changed, and only the mouth part is switched to the state of the pattern 2. It can be seen from FIG. 11 that a beard is added for the mouth after the switching. A tattoo is further added for the three-dimensional character. As can be seen from FIG. 12, a tattoo pattern is added for the forehead part of the character. Through the foregoing selections step by step, a finally displayed personalized face is as shown in FIG. 12.

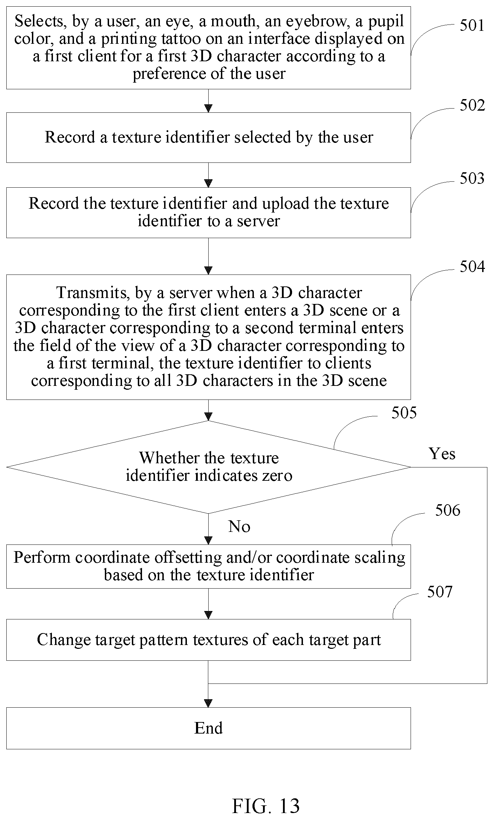

This solution is described with reference to FIG. 13. The method for displaying a personalized face of a customized three-dimensional character includes the following steps S501 to 507.

In Step 501, a user selects an eye, a mouth, an eyebrow, a pupil color, and a printing tattoo of a first three-dimensional character on an interface displayed on a first client according to a preference of the user.

In Step 502, the first client records a texture identifier selected by the user.

In Step 503, the first client records the texture identifier and uploads the texture identifier to a server.

In Step 504, the server transmits, after a three-dimensional character corresponding to the first client enters a three-dimensional scene or a three-dimensional character corresponding to a second terminal enters the field of the view of a three-dimensional character corresponding to a first terminal, the texture identifier to clients corresponding to all three-dimensional characters in the three-dimensional scene.

In Step 505, a second client determines whether the texture identifier indicates zero after receiving the texture identifier. If the texture identifier indicates zero, it indicates that the first client performs no personalized setting operation, or data of a first face model after the personalized setting operation remains unchanged when compared with that of the first face model before the modification, and the second client end a personalized customization process of a face model.

If the texture identifier is not zero, it indicates that the first client performs a personalized setting operation on the first face model, and step 506 is performed.

In Step 506, the second client performs coordinate offsetting and/or coordinate scaling based on the texture identifier.

In Step 507, the second client switches between target pattern textures of each target part.

The implementation of the foregoing steps is the same as that of the foregoing embodiments, and reference may be made to the content of the foregoing embodiment. Details are not repeated in this embodiment.

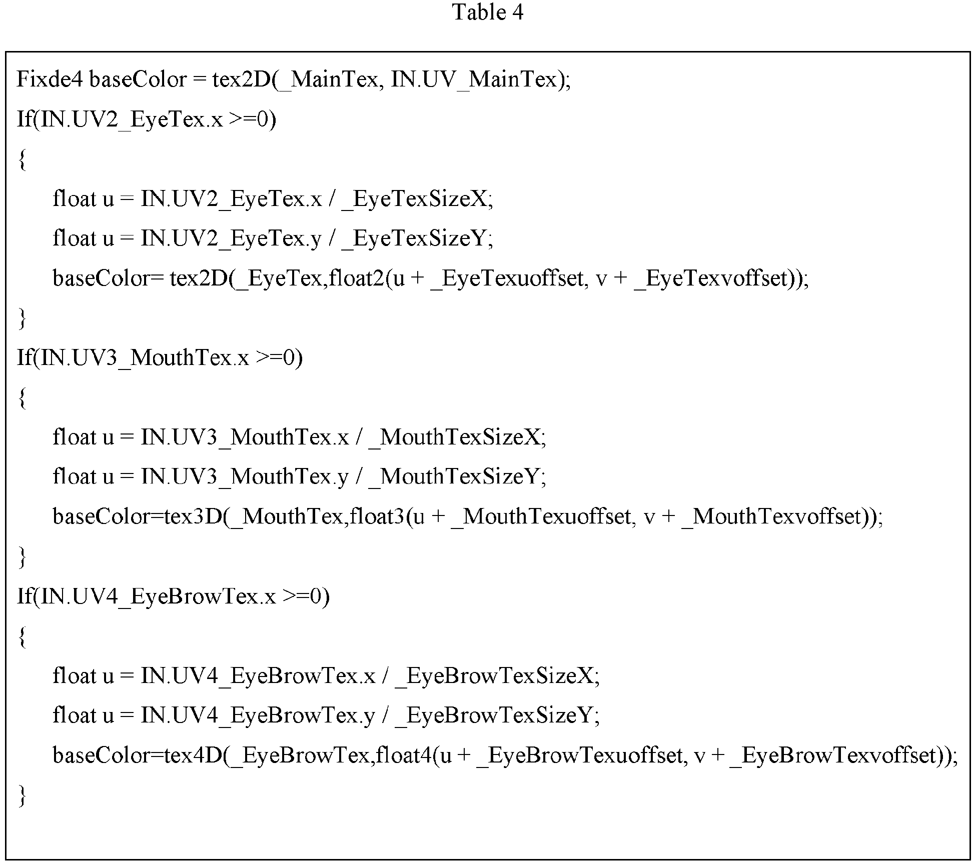

Table 4 shows a schematic program for the second client to generate a personalized face on the face model after receiving the texture identifier.

The method for displaying a personalized face of a three-dimensional character provided by the embodiments of this application may be applied to an application program supporting display of a three-dimensional virtual environment. The application program is installed in a terminal, and supports display of a three-dimensional virtual environment. The terminal may be a smart phone, a tablet computer, a personal computer, a portable computer, or the like. For example, the target application program is a game program, which is not limited in the embodiments of this application.

The method for displaying a personalized face of a three-dimensional character provided by the embodiments of this application is described below with reference to the following several schematic application scenarios.

### 1. Mobile game scenario

The method for displaying a personalized face of a three-dimensional character provided by the embodiments of this application may be implemented by a display module of an application program. The application program displays, on the display module based on a personalized customization operation performed by a user on a three-dimensional character, the three-dimensional character formed by the personalized customization of the user. The three-dimensional character has a personalized face model formed by the personalized customization. Optionally, the three-dimensional character formed by the personalized customization may display an expression animation.

### 2. Three-dimensional online game scenario

In a three-dimensional online game scenario, the method for displaying a personalized face of a three-dimensional character provided by the embodiments of this application may be implemented by a personalized customization module of a game program. The online game program generates a personalized face model formed by personalized customization based on a texture switching operation performed by a user on a three-dimensional character. The three-dimensional character formed by the personalized customization may display an expression animation.

Exemplary descriptions are made by using only the foregoing several possible application scenarios as examples. The method provided in the embodiments of this application may further be applied to another application scenario that requires the display of a personalized face model of a three-dimensional character, for example, a military simulation program, The Sims, an education simulation game, or a client game, the application scenario is not limited in the embodiments of this application.

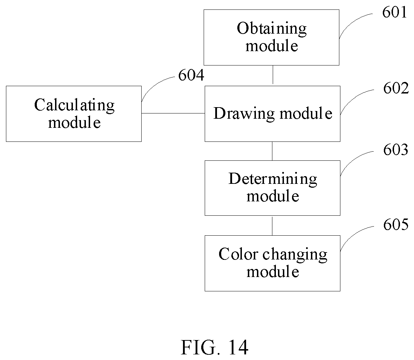

FIG. 14 is a block diagram of an apparatus for displaying a personalized face model of a three-dimensional character according to an embodiment of this application. The apparatus includes: an obtaining module 601, a drawing module 602, and a determining module 603. The obtaining module 601 is configured to obtain a texture identifier of a personalized face model of a three-dimensional character, the texture identifier is used for identifying a target pattern texture of a target part on the personalized face model, the target part is provided with a UV texture image, the UV texture image includes at least two candidate pattern textures of the target part. The drawing module 602 is configured to draw a basic UV texture image on the personalized face model, the basic UV texture image includes a texture of a region other than the target part. The determining module 603 is configured to determine the target pattern texture from the at least two candidate pattern textures corresponding to the target part based on the texture identifier. The drawing module 602 is further configured to draw the target pattern texture on a region corresponding to the target part on the personalized face model.

In some embodiments, the personalized face model includes n target parts, and a UV texture image corresponding to an i^{th} target part is set in an i^{th} UV coordinate system, where n is a positive integer greater than 1, and i is less than or equal to n. The apparatus for displaying a personalized face of a three-dimensional character further includes a calculating module 604. The determining module 603 is further configured to determine the region corresponding to the target part on the personalized face model. The calculating module 604 is configured to set a visible region in the i^{th} UV coordinate system onto the target pattern texture in the UV texture image by at least one of coordinate offsetting and coordinate scaling. The drawing module 602 is further configured to draw, on the region corresponding to the target part, a target pattern texture in the visible region.

In some embodiments, the determining module 603 is further configured to: obtain a UV coordinate of a vertex on the personalized face model in the i^{th} UV coordinate system, the UV coordinates including a U coordinate and a V coordinate; and determine a region in which a vertex with a U coordinate greater than or equal to 0 is located as the region corresponding to the target part.

In some embodiments, the determining module 603 is further configured to: obtain a UV coordinate of a vertex on the personalized face model in the i^{th} UV coordinate system, the UV coordinate including a U coordinate and a V coordinate; and determine a region in which a vertex with a V coordinate greater than or equal to 0 is located as the region corresponding to the target part.

In some embodiments, the calculating module 604 is further configured to set a start position of the visible region in the i^{th} UV coordinate system at a position of the target pattern texture by coordinate offsetting; and the calculation module 604 is further configured to set a region size of the visible region in the i^{th} UV coordinate system to be equal to a size of the target pattern texture by coordinate scaling.

In some embodiments, the drawing module 602 is further configured to obtain a coordinate mapping relationship, the coordinate mapping relationship including a mapping relationship between a texture coordinate of the target pattern texture and a vertex of the target part; and draw the target pattern texture in the visible region onto the region corresponding to the target part on the personalized face model based on the coordinate mapping relationship.

In some embodiments, a designated color channel in the basic UV texture image includes first position identification information of a first part. The apparatus for displaying a personalized face of a three-dimensional character further includes a color changing module 605. The obtaining module 601 is further configured to obtain a color identifier of the first part. The determining module 603 is further configured to determine a pixel corresponding to the first part based on the first position identification information in the designated color channel. The color changing module 605 is configured to change a color of the pixel corresponding to the first part based on the color identifier.

In some embodiments, a designated color channel in the basic UV texture image includes second position identification information of a second part. The obtaining module 601 is further configured to obtain a pattern identifier of the second part. The determining module 603 is further configured to determine a pixel corresponding to the second part based on the second position identification information in the designated color channel. The color changing module 605 is further configured to change a color of the pixel corresponding to the second part based on color matching information corresponding to the pattern identifier.

With the apparatus for displaying a personalized face of a three-dimensional character, at least two candidate pattern textures are drawn for each target part in advance. After receiving the texture identifier, the second client determines the target pattern texture from multiple candidate pattern textures based on the texture identifier, and draws the target pattern texture on the target part on the personalized face model. A personalized face model is implemented through various combinations of the target textures without drawing all possible personalized face models based on the candidate pattern textures, such that the workload for an art designer to draw texture images is reduced, which greatly reduces costs of implementing a customized personalized face of a three-dimensional model, and avoids a problem of excessively large program package and excessively large memory usage of an application program.

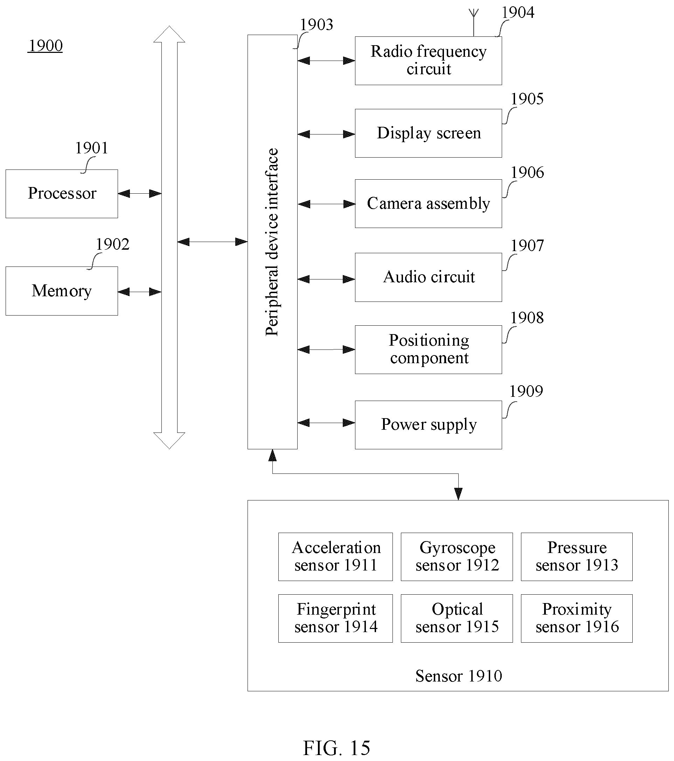

FIG. 15 is a structural block diagram of a computer device according to an embodiment of this application. The computer device may be a terminal 1900. The terminal may be a smartphone, a tablet computer, a Moving Picture Experts Group Audio Layer III (MP3) player, a Moving Picture Experts Group Audio Layer IV (MP4) player, a notebook computer, or a desktop computer. The terminal 1900 may also be referred to as another name such as user equipment, a portable terminal, a laptop terminal, or a desktop terminal.

Generally, the terminal 1900 includes a processor 1901 and a memory 1902.

The processor 1901 may include one or more processing cores, and may be, for example, a 4-core processor or an 8-core processor. The processor 1901 may be implemented in at least one hardware form of a digital signal processor (DSP), a field-programmable gate array (FPGA), or a programmable logic array (PLA). The processor 1901 may also include a main processor and a coprocessor. The main processor is configured to process data in an awake state, and is also referred to as a central processing unit (CPU). The coprocessor is a low power consumption processor configured to process the data in a standby state. In some embodiments, the processor 1901 may be integrated with a graphics processing unit (GPU). The GPU is configured to render and draw content that needs to be displayed on a display. In some embodiments, the processor 1901 may further include an artificial intelligence (AI) processor. The AI processor is configured to process computing operations related to machine learning.

The memory 1902 may include one or more computer-readable storage medium. The computer-readable storage medium may be non-transient. The memory 1902 may further include a high-speed random access memory, and a non-volatile memory, such as one or more magnetic disk storage devices and a flash memory device. In some embodiments, the non-transitory computer-readable storage medium in the memory 1902 is configured to store at least one instruction, the at least one instruction is configured to perform, when executed by the processor 1901, the method for displaying a personalized face of a three-dimensional character provided in the method embodiments of this application.

In some embodiments, the terminal 1900 may optionally include a peripheral device interface 1903 and at least one peripheral device. The processor 1901, the memory 1902, and the peripheral device interface 1903 may be connected with each other via a bus or a signal line. Each peripheral device may be connected to the peripheral device interface 1903 via a bus, a signal cable, or a circuit board. Specifically, the peripheral device includes at least one of a radio frequency circuit 1904, a display screen 1905, a camera assembly 1906, an audio circuit 1907, a positioning component 1908, and a power supply 1909.

The peripheral device interface 1903 may be configured to connect the at least one peripheral device related to input/output (I/O) to the processor 1901 and the memory 1902. In some embodiments, the processor 1901, the memory 1902, and the peripheral device interface 1903 are integrated on the same chip or circuit board. In some other embodiments, any one or two of the processors 1901, the memory 1902, and the peripheral device interface 1903 may be implemented on a separate chip or circuit board, which is not limited in this embodiment.

The radio frequency circuit 1904 is configured to receive and transmit an Radio Frequency (RF) signal, which is also referred to as an electromagnetic signal. The radio frequency circuit 1904 communicates with a communication network and another communication device by using the electromagnetic signal. The radio frequency circuit 1904 converts an electric signal into an electromagnetic signal for transmission, or converts a received electromagnetic signal into an electric signal. Optionally, the radio frequency circuit 1904 includes: an antenna system, an RF transceiver, one or more amplifiers, a tuner, an oscillator, a digital signal processor, a codec chip set, a subscriber identity module card, and the like. The radio frequency circuit 1904 may communicate with other terminals by using at least one wireless communication protocol. The wireless communication protocol includes, but is not limited to at least one of a world wide web, a metropolitan area network, an intranet, various generations of mobile communication networks (2G, 3G, 4G, and 5G), a wireless local area network, and a wireless fidelity (Wi-Fi) network. In some embodiments, the radio frequency circuit 1904 may further include a circuit related to Near Field Communication (NFC), which is not limited in this application.

The display screen 1905 is configured to display a user interface (UI). The UI may include a graph, text, an icon, a video, and any combination thereof. When the display screen 1905 is a touch display screen, the display screen 1905 is also capable of acquiring a touch signal on or above a surface of the display screen 1905. The touch signal may be inputted into the processor 1901 as a control signal for processing. In this case, the display screen 1905 may be further configured to provide a virtual button and/or a virtual keyboard, which is also referred to as a soft button and/or a soft keyboard. In some embodiments, there may be one display screen 1905 disposed on a front panel of the terminal 1900. In some other embodiments, there may be at least two display screens 1905 respectively disposed on different surfaces of the terminal 1900 or arranged in a foldable form. In still some other embodiments, the display screen 1905 may be a flexible display screen disposed on a curved surface or a folded surface of the terminal 1900. The display screen 1905 may even have a non-rectangular irregular shape, that is, a special-shaped screen. The display screen 1905 may be prepared by using materials such as a liquid crystal display (LCD), an organic light-emitting diode (OLED), or the like.

The camera assembly 1906 is configured to acquire an image or a video. Optionally, the camera assembly 1906 includes a front-facing camera and a rear-facing camera. Generally, the front-facing camera is disposed on the front panel of the terminal, and the rear-facing camera is disposed on a back surface of the terminal. In some embodiments, there are at least two rear cameras, which are respectively any of a main camera, a depth-of-field camera, a wide-angle camera, and a telephoto camera, to achieve a background blur function with the cooperation of the main camera and the depth-of-field camera, to achieve a panoramic photographing and virtual reality (VR) photographing function with the cooperation of the main camera and the wide-angle camera, or achieve other photographing functions with cooperation of cameras. In some embodiments, the camera assembly 1906 may further include a flash. The flash may be a single color temperature flash or a double color temperature flash. The double color temperature flash refers to a combination of a warm light flash and a cold light flash, and may be used for light compensation under different color temperatures.

The audio circuit 1907 may include a microphone and a speaker. The microphone is configured to acquire sound waves of users and surroundings, and convert the sound waves into electrical signals and input the signals to the processor 1901 for processing, or input the signals to the radio frequency circuit 1904 to implement voice communication. For a purpose of stereo acquisition or noise reduction, there may be multiple microphones disposed at different portions of the terminal 1900 respectively. The microphone may alternatively be a microphone array or an omnidirectional acquisition microphone. The speaker is configured to convert electrical signals from the processor 1901 or the radio frequency circuit 1904 into sound waves. The speaker may be a conventional thinfilm speaker or a piezoelectric ceramic speaker. When the speaker is the piezoelectric ceramic speaker, electrical signals not only can be converted into sound waves that can be heard by human, but also can be converted into sound waves that cannot be heard by human for ranging and the like. In some embodiments, the audio circuit 1907 may also include an earphone jack.

The positioning component 1908 is configured to position a current geographic position of the terminal 1900, to implement navigation or a location based service (LBS). The positioning component 1908 may be a positioning component based on the global positioning system (GPS) of the United States, the BeiDou System of China, and the GALILEO System of Russia.

The power supply 1909 is configured to supply power to components in the terminal 1900. The power supply 1909 may be an alternating current power supply, a direct current power supply, a primary battery, or a rechargeable battery. When the power supply 1909 includes a rechargeable battery, the rechargeable battery may be a wired rechargeable battery or a wireless rechargeable battery. The wired rechargeable battery is a battery charged through a wired circuit, and the wireless rechargeable battery is a battery charged through a wireless coil. The rechargeable battery may be further configured to support a fast charge technology.

In some embodiments, the terminal 1900 may also include one or more sensors 1910. The one or more sensors 1910 include, but are not limited to, an acceleration sensor 1911, a gyroscope sensor 1912, a pressure sensor 1913, a fingerprint sensor 1914, an optical sensor 1915, and a proximity sensor 1916.

The acceleration sensor 1911 may detect an acceleration on each of three coordinate axes of a coordinate system established with the terminal 1900. For example, the acceleration sensor 1911 may be configured to detect components of the gravity acceleration on the three coordinate axes. The processor 1901 may control, based on a gravity acceleration signal acquired by the acceleration sensor 1911, the display screen 1905 to display the user interface in a frame view or a portrait view. The acceleration sensor 1911 may be further configured to acquire motion data of a game or a user.

The gyroscope sensor 1912 may detect a body direction and a rotation angle of the terminal 1900. The gyroscope sensor 1912 may cooperate with the acceleration sensor 1911 to acquire a 3D action by the user on the terminal 1900. Based on the data acquired by the gyroscope sensor 1912, the processor 1901 may implement the following functions: motion sensing (such as changing the UI in response to a tilt operation of the user), image stabilization at shooting, game control, and inertial navigation.

The pressure sensor 1913 may be disposed on at least one of a side frame of the terminal 1900 or a lower layer of the display screen 1905. When the pressure sensor 1913 is disposed on the side frame of the terminal 1900, a holding signal of the user on the terminal 1900 may be detected. The processor 1901 performs recognition on a left and right hand or performs a quick operation in response to the holding signal acquired by the pressure sensor 1913. When the pressure sensor 1913 is disposed on the lower layer of the touch display screen 1905, the processor 1901 controls, in response to a pressure operation of the user on the display screen 1905, an operable control on the UI. The operable control includes at least one of a button control, a scroll bar control, an icon control, and a menu control.

The fingerprint sensor 1914 is configured to acquire a fingerprint of a user, and the processor 1901 identifies an identity of the user based on the fingerprint acquired by the fingerprint sensor 1914, or the fingerprint sensor 1914 identifies the identity of the user based on the acquired fingerprint. When the identity of the user is identified as a trusted identity, the processor 1901 authorizes the user to perform a related sensitive operation. The sensitive operation includes unlocking a screen, viewing encrypted information, downloading software, payment, changing settings, and the like. The fingerprint sensor 1914 may be disposed on a front face, a back face, or a side face of the terminal 1900. When a physical button or a vendor logo is disposed on the terminal 1900, the fingerprint sensor 1914 may be integrated with the physical button or the vendor logo.

The optical sensor 1915 is configured to acquire ambient light intensity. In an embodiment, the processor 1901 may control display brightness of the display screen 1905 based on the ambient light intensity acquired by the optical sensor 1915. Specifically, when the ambient light intensity is high, the display brightness of the display screen 1905 is increased. When the ambient light intensity is low, the display brightness of the display screen 1905 is reduced. In another embodiment, the processor 1901 may further dynamically adjust a camera parameter of the camera assembly 1906 based on the ambient light intensity acquired by the optical sensor 1915.

The proximity sensor 1916, which is also referred to as a distance sensor, is generally disposed on the front panel of the terminal 1900. The proximity sensor 1916 is configured to acquire a distance between the user and the front surface of the terminal 1900. In an embodiment, when the proximity sensor 1916 detects that the distance between the user and the front surface of the terminal 1900 gradually becomes smaller, the display screen 1905 is controlled by the processor 1901 to switch from a screen-on state to a screen-off state. In a case that the proximity sensor 1916 detects that the distance between the user and the front surface of the terminal 1900 gradually becomes larger, the display screen 1905 is controlled by the processor 1901 to switch from the screen-off state to the screen-on state.

A person skilled in the art may understand that the structure shown in FIG. 15 constitutes no limitation on the terminal 1900, and the terminal may include more or fewer components than those shown in the figure, or some components may be combined, or a different component deployment may be used.

A computer device is further provided according to an embodiment of this application. The computer device includes a processor and a memory, the memory stores a computer-readable instruction, the computer-readable instruction is loaded and executed by the processor to implement the steps of the foregoing method for displaying a personalized face of a three-dimensional character.

A computer-readable storage medium is further provided according to an embodiment of this application. The computer-readable storage medium stores computer-readable instructions, the computer-readable instructions are loaded and executed by a processor to implement the steps of the foregoing method for displaying a personalized face of a three-dimensional character.

A computer program product is further provided according to an embodiment of this application, which stores computer-readable instructions. The computer-readable instructions are loaded and executed by a processor to implement the steps of the foregoing method for displaying a personalized face of a three-dimensional character.

Other embodiments of this application can be readily figured out by a person skilled in the art upon consideration of the specification and practice of the disclosure here. This application is intended to cover any variations, uses or adaptive changes of this application. Such variations, uses or adaptive changes follow the general principles of this application, and include well-known knowledge and conventional technical means in the art that are not disclosed in this application.

"Multiple" mentioned in the specification means two or more. "And/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

A person of ordinary skill in the art may understand that all or some of the steps of the foregoing embodiments may be implemented by hardware, or may be implemented by a program instructing relevant hardware. The program may be stored in a computer-readable storage medium. The storage medium may be a read-only memory, a magnetic disk, an optical disc, or the like.

The foregoing descriptions are merely preferred embodiments of this application, but are not intended to limit this application.

## Claims

1. A computer-implemented method for displaying a personalized face of a three-dimensional character, the method comprising he steps of:
obtaining (207) a texture identifier of a personalized face model of a three-dimensional character,
wherein the personalized face model comprises n target parts, each target part being configured with a UV texture image, the UV texture image comprising at least two candidate pattern textures corresponding to the target part,
wherein a UV texture image corresponding to an i^{th} target part is separately set in an i^{th} UV coordinate system, where n is a positive integer greater than 1, and i is less than or equal to n, each of the plurality of UV texture images comprises at least two candidate pattern textures of the target part, and
wherein the texture identifier is used for identifying a target pattern texture of a target part in the n target parts on the personalized face model, and the texture identifier comprises coordinate offset data and coordinate scaling data;
drawing a basic UV texture image on the personalized face model, the basic UV texture image comprising a texture of a region other than the target part;
determining, based on the texture identifier, the target pattern texture from the at least two candidate pattern textures corresponding to the target part; and
determining (210a) a region corresponding to the target part on the personalized face model;
setting (210b) a visible region in the i^{th} UV coordinate system onto the target pattern texture in the UV texture image by the coordinate offsetting data and the coordinate scaling data, wherein a start position of the visible region in the i^{th} UV coordinate system is set at a position of the target pattern texture by the coordinate offsetting data and a region size of the visible region in the i^{th} UV coordinate system is set to be equal to a size of the target pattern texture by the coordinate scaling data; and
drawing (210c), on the region corresponding to the target part, the target pattern texture in the visible region;
wherein before the obtaining (207) of the texture identifier of a personalized face model of a three-dimensional character, the method further comprises:
displaying (201), by a first client, a setting interface of a personalized face of a three-dimensional character, wherein the setting interface comprises a preview picture of a first face model and n setting options;
receiving (202), by the first client, a setting operation triggered on a target setting option in the n setting options, wherein the setting operation is used for selecting a target pattern texture from candidate pattern textures corresponding to the target setting option;
generating (203), by the first client, a texture identifier corresponding to the target pattern texture based on the setting operation;
reporting (204), by the first client, the texture identifier to a server;
receiving and storing (205) the texture identifier by the server; and
transmitting (206), by the server, the texture identifier of the personalized face model of the three-dimensional character to at least one of the first client and a second client.

2. The computer-implemented method according to claim 1, wherein the determining (210a) the region corresponding to the target part on the personalized face model comprises:
obtaining a UV coordinate of a vertex on the personalized face model in the i^{th} UV coordinate system, the UV coordinate comprising a U coordinate and a V coordinate; and
determining a region in which a vertex with a U coordinate greater than or equal to 0 is located as the region corresponding to the target part.

3. The computer-implemented method according to claim 1, wherein the determining (210a) the region corresponding to the target part on the personalized face model comprises:
obtaining a UV coordinate of a vertex on the personalized face model in the i^{th} UV coordinate system, the UV coordinate comprising a U coordinate and a V coordinate; and
determining a region in which a vertex with a V coordinate greater than or equal to 0 is located as the region corresponding to the target part.

4. The computer-implemented method according to claim 1, wherein the drawing (210c), on the region corresponding to the target part, the target pattern texture in the visible region comprises:
obtaining a coordinate mapping relationship, the coordinate mapping relationship comprising a mapping relationship between a texture coordinate of the target pattern texture and a vertex of the target part; and
drawing, based on the coordinate mapping relationship, the target pattern texture in the visible region onto the region corresponding to the target part on the personalized face model.

5. The computer-implemented method according to any one of claims 1 to 4, wherein the target part comprises at least one of an eye, a mouth, an eyebrow, a nose, an ear, and a hair style.

6. The computer-implemented method according to any one of claims 1 to 4, wherein a color channel in the basic UV texture image comprises first position identification information of a first part, and wherein the method further comprises:
obtaining a color identifier of the first part from the basic UV texture image;
determining a pixel corresponding to the first part based on the first position identification information in the color channel; and
changing a color of the pixel corresponding to the first part based on the color identifier.

7. The computer-implemented method according to any one of claims 1 to 4, wherein a color channel in the basic UV texture image comprises second position identification information of a second part, and the second part is set on the basic UV texture image, and wherein
the method further comprises:
obtaining a pattern identifier of the second part;
determining a pixel corresponding to the second part based on the second position identification information in the color channel; and
changing a color of the pixel corresponding to the second part based on color matching information corresponding to the pattern identifier.

8. An apparatus for displaying a personalized face of a three-dimensional character, the apparatus comprising:
an obtaining module (601), configured to obtain a texture identifier of a personalized face model of a three-dimensional character,
wherein the personalized face model comprises n target parts, each target part being configured with a UV texture image, the UV texture image comprising at least two candidate pattern textures corresponding to the target part,
wherein a UV texture image corresponding to an i^{th} target part is separately set in an i^{th} UV coordinate system, where n is a positive integer greater than 1, and i is less than or equal to n, each of the plurality of UV texture images comprises at least two candidate pattern textures of the target part, and
wherein the texture identifier is used for identifying a target pattern texture of a target part in the n target parts on the personalized face model, and the texture identifier comprises coordinate offset data and coordinate scaling data;
a drawing module (602), configured to draw a basic UV texture image on the personalized face model, the basic UV texture image comprising a texture of a region other than the target part; and
a determining module (603), configured to determine, based on the texture identifier, the target pattern texture from the at least two candidate pattern textures corresponding to the target part, and to determine a region corresponding to the target part on the personalized face model;
the calculating module is configured to set a visible region in the i^{th} UV coordinate system onto the target pattern texture in the UV texture image by coordinate offsetting and coordinate scaling, wherein a start position of the visible region in the i^{th} UV coordinate system is set at a position of the target pattern texture by the coordinate offsetting data and a region size of the visible region in the i^{th} UV coordinate system is set to be equal to a size of the target pattern texture by the coordinate scaling data; and
the drawing module (602) is further configured to draw, on the region corresponding to the target part, the target pattern texture in the visible region;
a first client, configured to display a setting interface of a personalized face of a three-dimensional character, wherein the setting interface comprises a preview picture of a first face model and n setting options;
the first client is further configured to receive a setting operation triggered on a target setting option in the n setting options, wherein the setting operation is used for selecting a target pattern texture from candidate pattern textures corresponding to the target setting option;
the first client is further configured to generate a texture identifier corresponding to the target pattern texture based on the setting operation; and
report the texture identifier to a server; and
the server is configured to receive and store the texture identifier and transmit the texture identifier of the personalized face model of the three-dimensional character to at least one of the first client and a second client.

9. The apparatus according to claim 8, wherein the determining module (603) is further configured to:
obtain a UV coordinate of a vertex on the personalized face model in the i^{th} UV coordinate system, the UV coordinate comprising a U coordinate and a V coordinate; and
determine a region in which a vertex with a U coordinate greater than or equal to 0 is located as the region corresponding to the target part.

10. The apparatus according to claim 8, wherein the determining module (603) is further configured to:
obtain a UV coordinate of a vertex on the personalized face model in the i^{th} UV coordinate system, the UV coordinate comprising a U coordinate and a V coordinate; and
determine a region in which a vertex with a V coordinate greater than or equal to 0 is located as the region corresponding to the target part.

11. A computer device (1900), comprising a processor (1901) and a memory (1902), the memory storing computer-readable instructions, the computer-readable instructions, when loaded and executed by the processor, perform steps of the method for displaying a personalized face of a three-dimensional character according to any one of claims 1 to 7.

12. A computer-readable storage medium, storing computer-readable instructions, the computer-readable instructions, when loaded and executed by a processor, performs steps of the method for displaying a personalized face of a three-dimensional character according to any one of claims 1 to 7.

## Patentansprüche

1. Computerimplementiertes Verfahren zur Anzeige eines personalisierten Gesichts einer dreidimensionalen Figur, wobei das Verfahren die folgenden Schritte umfasst:
Erlangen (207) eines Texturkennzeichners eines personalisierten Gesichtsmodells einer dreidimensionalen Figur,
wobei das personalisierte Gesichtsmodell n Zielteile umfasst, wobei jeder Zielteil mit einem UV-Texturbild konfiguriert ist, wobei das UV-Texturbild mindestens zwei Kandidatenmuster-Texturen umfasst, die dem Zielteil entsprechen,
wobei ein UV-Texturbild, das einem i-ten Zielteil entspricht, separat in einem i-ten UV-Koordinatensystem eingestellt ist, wobei n eine positive ganze Zahl größer als 1 ist und i kleiner oder gleich n ist, jedes der Mehrzahl von UV-Texturbildern mindestens zwei Kandidatenmuster-Texturen des Zielteils umfasst, und
wobei der Texturkennzeichner zur Identifizierung einer Zielmuster-Textur eines Zielteils unter den n Zielteilen auf dem personalisierten Gesichtsmodell verwendet wird und der Texturkennzeichner Koordinatenversatzdaten und Koordinatenskalierungsdaten umfasst;
Zeichnen eines grundlegenden UV-Texturbilds auf dem personalisierten Gesichtsmodell, wobei das grundlegende UV-Texturbild eine Textur einer anderen Region als des Zielteils umfasst;
Bestimmen, basierend auf dem Texturkennzeichner, der Zielmuster-Textur aus den mindestens zwei Kandidatenmuster-Texturen, die dem Zielteil entsprechen; und
Bestimmen (210a) einer Region, die dem Zielteil auf dem personalisierten Gesichtsmodell entspricht;
Einstellen (210b) eines sichtbaren Bereichs in dem i-ten UV-Koordinatensystem auf die Zielmuster-Textur in dem UV-Texturbild mittels der Koordinatenversatzdaten und der Koordinatenskalierungsdaten, wobei eine Startposition des sichtbaren Bereichs in dem i-ten UV-Koordinatensystem durch die Koordinatenversatzdaten auf eine Position der Zielmuster-Textur eingestellt wird und eine Regionsgröße des sichtbaren Bereichs in dem i-ten UV-Koordinatensystem durch die Koordinatenskalierungsdaten gleich einer Größe der Zielmuster-Textur eingestellt wird; und
Zeichnen (210c), auf der dem Zielteil entsprechenden Region, der Zielmuster-Textur in dem sichtbaren Bereich;
wobei das Verfahren vor dem Erlangen (207) des Texturkennzeichners eines personalisierten Gesichtsmodells einer dreidimensionalen Figur ferner umfasst:
Anzeigen (201), durch einen ersten Client, einer Einstellungsschnittstelle eines personalisierten Gesichts einer dreidimensionalen Figur, wobei die Einstellungsschnittstelle ein Vorschaubild eines ersten Gesichtsmodells und n Einstellungsoptionen umfasst;
Empfangen (202), durch den ersten Client, einer Einstellungsoperation, die auf einer Ziel-Einstellungsoption unter den n Einstellungsoptionen ausgelöst wird, wobei die Einstellungsoperation zur Auswahl einer Zielmuster-Textur aus Kandidatenmuster-Texturen verwendet wird, die der Ziel-Einstellungsoption entsprechen;
Erzeugen (203), durch den ersten Client, eines Texturkennzeichners, der der Zielmuster-Textur basierend auf der Einstellungsoperation entspricht;
Melden (204), durch den ersten Client, des Texturkennzeichners an einen Server;
Empfangen und Speichern (205) des Texturkennzeichners durch den Server; und
Übertragen (206), durch den Server, des Texturkennzeichners des personalisierten Gesichtsmodells der dreidimensionalen Figur an mindestens einen des ersten Clients und eines zweiten Clients.

2. Computerimplementiertes Verfahren nach Anspruch 1, wobei das Bestimmen (210a) der Region, die dem Zielteil auf dem personalisierten Gesichtsmodell entspricht, umfasst:
Erlangen einer UV-Koordinate eines Scheitelpunkts auf dem personalisierten Gesichtsmodell in dem i-ten UV-Koordinatensystem, wobei die UV-Koordinate eine U-Koordinate und eine V-Koordinate umfasst; und
Bestimmen einer Region, in der ein Scheitelpunkt mit einer U-Koordinate größer oder gleich 0 liegt, als die dem Zielteil entsprechende Region.

3. Computerimplementiertes Verfahren nach Anspruch 1, wobei das Bestimmen (210a) der Region, die dem Zielteil auf dem personalisierten Gesichtsmodell entspricht, umfasst:
Erlangen einer UV-Koordinate eines Scheitelpunkts auf dem personalisierten Gesichtsmodell in dem i-ten UV-Koordinatensystem, wobei die UV-Koordinate eine U-Koordinate und eine V-Koordinate umfasst; und
Bestimmen einer Region, in der ein Scheitelpunkt mit einer V-Koordinate größer oder gleich 0 liegt, als die dem Zielteil entsprechende Region.

4. Computerimplementiertes Verfahren nach Anspruch 1, wobei das Zeichnen (210c), auf der dem Zielteil entsprechenden Region, der Zielmuster-Textur in dem sichtbaren Bereich umfasst:
Erlangen einer Koordinatenabbildungsbeziehung, wobei die Koordinatenabbildungsbeziehung eine Abbildungsbeziehung zwischen einer Texturkoordinate der Zielmuster-Textur und einem Scheitelpunkt des Zielteils umfasst; und
Zeichnen, basierend auf der Koordinatenabbildungsbeziehung, der Zielmuster-Textur in dem sichtbaren Bereich auf die dem Zielteil entsprechende Region auf dem personalisierten Gesichtsmodell.

5. Computerimplementiertes Verfahren nach einem der Ansprüche 1 bis 4, wobei der Zielteil mindestens eines von einem Auge, einem Mund, einer Augenbraue, einer Nase, einem Ohr und einer Frisur umfasst.

6. Computerimplementiertes Verfahren nach einem der Ansprüche 1 bis 4, wobei ein Farbkanal in dem grundlegenden UV-Texturbild erste Positionsidentifikationsinformationen eines ersten Teils umfasst, und wobei das Verfahren ferner umfasst:
Erlangen eines Farbkennzeichners des ersten Teils aus dem grundlegenden UV-Texturbild;
Bestimmen eines Pixels, das dem ersten Teil entspricht, basierend auf den ersten Positionsidentifikationsinformationen in dem Farbkanal; und
Ändern einer Farbe des Pixels, das dem ersten Teil entspricht, basierend auf dem Farbkennzeichner.

7. Computerimplementiertes Verfahren nach einem der Ansprüche 1 bis 4, wobei ein Farbkanal in dem grundlegenden UV-Texturbild zweite Positionsidentifikationsinformationen eines zweiten Teils umfasst und der zweite Teil auf dem grundlegenden UV-Texturbild eingestellt ist, und wobei
das Verfahren ferner umfasst:
Erlangen eines Musterkennzeichners des zweiten Teils;
Bestimmen eines Pixels, das dem zweiten Teil entspricht, basierend auf den zweiten Positionsidentifikationsinformationen in dem Farbkanal; und
Ändern einer Farbe des Pixels, das dem zweiten Teil entspricht, basierend auf Farbübereinstimmungsinformationen, die dem Musterkennzeichner entsprechen.

8. Vorrichtung zur Anzeige eines personalisierten Gesichts einer dreidimensionalen Figur, wobei die Vorrichtung umfasst:
ein Erlangungsmodul (601), das konfiguriert ist zum Erlangen eines Texturkennzeichners eines personalisierten Gesichtsmodells einer dreidimensionalen Figur,
wobei das personalisierte Gesichtsmodell n Zielteile umfasst, wobei jeder Zielteil mit einem UV-Texturbild konfiguriert ist, wobei das UV-Texturbild mindestens zwei Kandidatenmuster-Texturen umfasst, die dem Zielteil entsprechen,
wobei ein UV-Texturbild, das einem i-ten Zielteil entspricht, separat in einem i-ten UV-Koordinatensystem eingestellt ist, wobei n eine positive ganze Zahl größer als 1 ist und i kleiner oder gleich n ist, jedes der Mehrzahl von UV-Texturbildern mindestens zwei Kandidatenmuster-Texturen des Zielteils umfasst, und
wobei der Texturkennzeichner zur Identifizierung einer Zielmuster-Textur eines Zielteils unter den n Zielteilen auf dem personalisierten Gesichtsmodell verwendet wird und der Texturkennzeichner Koordinatenversatzdaten und Koordinatenskalierungsdaten umfasst;
ein Zeichenmodul (602), das konfiguriert ist zum Zeichnen eines grundlegenden UV-Texturbilds auf dem personalisierten Gesichtsmodell, wobei das grundlegende UV-Texturbild eine Textur einer anderen Region als des Zielteils umfasst; und
ein Bestimmungsmodul (603), das konfiguriert ist zum Bestimmen, basierend auf dem Texturkennzeichner, der Zielmuster-Textur aus den mindestens zwei Kandidatenmuster-Texturen, die dem Zielteil entsprechen, und zum Bestimmen einer Region, die dem Zielteil auf dem personalisierten Gesichtsmodell entspricht;
das Berechnungsmodul ist konfiguriert zum Einstellen eines sichtbaren Bereichs in dem i-ten UV-Koordinatensystem auf die Zielmuster-Textur in dem UV-Texturbild durch Koordinatenversatz und Koordinatenskalierung, wobei eine Startposition des sichtbaren Bereichs in dem i-ten UV-Koordinatensystem durch die Koordinatenversatzdaten auf eine Position der Zielmuster-Textur eingestellt wird und eine Regionsgröße des sichtbaren Bereichs in dem i-ten UV-Koordinatensystem durch die Koordinatenskalierungsdaten gleich einer Größe der Zielmuster-Textur eingestellt wird; und
das Zeichenmodul (602) ist ferner konfiguriert zum Zeichnen, auf der dem Zielteil entsprechenden Region, der Zielmuster-Textur in dem sichtbaren Bereich;
ein erster Client, der konfiguriert ist zum Anzeigen einer Einstellungsschnittstelle eines personalisierten Gesichts einer dreidimensionalen Figur, wobei die Einstellungsschnittstelle ein Vorschaubild eines ersten Gesichtsmodells und n Einstellungsoptionen umfasst;
der erste Client ist ferner konfiguriert zum Empfangen einer Einstellungsoperation, die auf einer Ziel-Einstellungsoption unter den n Einstellungsoptionen ausgelöst wird, wobei die Einstellungsoperation zur Auswahl einer Zielmuster-Textur aus Kandidatenmuster-Texturen verwendet wird, die der Ziel-Einstellungsoption entsprechen;
der erste Client ist ferner konfiguriert zum Erzeugen eines Texturkennzeichners, der der Zielmuster-Textur basierend auf der Einstellungsoperation entspricht; und
Melden des Texturkennzeichners an einen Server; und
der Server ist konfiguriert zum Empfangen und Speichern des Texturkennzeichners und zum Übertragen des Texturkennzeichners des personalisierten Gesichtsmodells der dreidimensionalen Figur an mindestens einen des ersten Clients und eines zweiten Clients.

9. Vorrichtung nach Anspruch 8, wobei das Bestimmungsmodul (603) ferner konfiguriert ist zum:
Erlangen einer UV-Koordinate eines Scheitelpunkts auf dem personalisierten Gesichtsmodell in dem i-ten UV-Koordinatensystem, wobei die UV-Koordinate eine U-Koordinate und eine V-Koordinate umfasst; und
Bestimmen einer Region, in der ein Scheitelpunkt mit einer U-Koordinate größer oder gleich 0 liegt, als die dem Zielteil entsprechende Region.

10. Vorrichtung nach Anspruch 8, wobei das Bestimmungsmodul (603) ferner konfiguriert ist zum:
Erlangen einer UV-Koordinate eines Scheitelpunkts auf dem personalisierten Gesichtsmodell in dem i-ten UV-Koordinatensystem, wobei die UV-Koordinate eine U-Koordinate und eine V-Koordinate umfasst; und
Bestimmen einer Region, in der ein Scheitelpunkt mit einer V-Koordinate größer oder gleich 0 liegt, als die dem Zielteil entsprechende Region.

11. Computervorrichtung (1900), umfassend einen Prozessor (1901) und einen Speicher (1902), wobei der Speicher computerlesbare Anweisungen speichert, die computerlesbaren Anweisungen, wenn sie durch den Prozessor geladen und ausgeführt werden, die Schritte des Verfahrens zur Anzeige eines personalisierten Gesichts einer dreidimensionalen Figur nach einem der Ansprüche 1 bis 7 ausführen.

12. Computerlesbares Speichermedium, das computerlesbare Anweisungen speichert, wobei die computerlesbaren Anweisungen, wenn sie durch einen Prozessor geladen und ausgeführt werden, die Schritte des Verfahrens zur Anzeige eines personalisierten Gesichts einer dreidimensionalen Figur nach einem der Ansprüche 1 bis 7 ausführen.

## Revendications

1. Procédé mis en œuvre par ordinateur pour afficher un visage personnalisé d'un personnage tridimensionnel, le procédé comprenant les étapes consistant à :
obtenir (207) un identifiant de texture d'un modèle de visage personnalisé d'un personnage tridimensionnel,
dans lequel le modèle de visage personnalisé comprend n parties cibles, chaque partie cible étant configurée avec une image de texture UV, l'image de texture UV comprenant au moins deux textures de motif candidat correspondant à la partie cible,
dans lequel une image de texture UV correspondant à une i-ième partie cible est définie séparément dans un i-ième système de coordonnées UV, où n est un entier positif supérieur à 1, et i est inférieur ou égal à n, chacune de la pluralité d'images de texture UV comprend au moins deux textures de motif candidat de la partie cible, et
dans lequel l'identifiant de texture est utilisé pour identifier une texture de motif cible d'une partie cible parmi les n parties cibles sur le modèle de visage personnalisé, et l'identifiant de texture comprend des données de décalage de coordonnées et des données de mise à l'échelle de coordonnées ;
dessiner une image de texture UV de base sur le modèle de visage personnalisé, l'image de texture UV de base comprenant une texture d'une région autre que la partie cible ;
déterminer, sur la base de l'identifiant de texture, la texture de motif cible parmi les au moins deux textures de motif candidat correspondant à la partie cible ; et
déterminer (210a) une région correspondant à la partie cible sur le modèle de visage personnalisé ;
définir (210b) une région visible dans le i-ième système de coordonnées UV sur la texture de motif cible dans l'image de texture UV au moyen des données de décalage de coordonnées et
des données de mise à l'échelle de coordonnées, dans lequel une position de départ de la région visible dans le i-ième système de coordonnées UV est définie à une position de la texture de motif cible par les données de décalage de coordonnées et une taille de région de la région visible dans le i-ième système de coordonnées UV est définie comme étant égale à une taille de la texture de motif cible par les données de mise à l'échelle de coordonnées ; et
dessiner (210c), sur la région correspondant à la partie cible, la texture de motif cible dans la région visible ;
dans lequel, avant l'obtention (207) de l'identifiant de texture d'un modèle de visage personnalisé d'un personnage tridimensionnel, le procédé comprend en outre :
afficher (201), par un premier client, une interface de paramétrage d'un visage personnalisé d'un personnage tridimensionnel, dans lequel l'interface de paramétrage comprend une image de prévisualisation d'un premier modèle de visage et n options de paramétrage ;
recevoir (202), par le premier client, une opération de paramétrage déclenchée sur une option de paramétrage cible parmi les n options de paramétrage, dans lequel l'opération de paramétrage est utilisée pour sélectionner une texture de motif cible parmi des textures de motif candidat correspondant à l'option de paramétrage cible ;
générer (203), par le premier client, un identifiant de texture correspondant à la texture de motif cible sur la base de l'opération de paramétrage ;
signaler (204), par le premier client, l'identifiant de texture à un serveur ;
recevoir et stocker (205) l'identifiant de texture par le serveur ; et
transmettre (206), par le serveur, l'identifiant de texture du modèle de visage personnalisé du personnage tridimensionnel à au moins l'un parmi le premier client et un deuxième client.

2. Procédé mis en œuvre par ordinateur selon la revendication 1, dans lequel la détermination (210a) de la région correspondant à la partie cible sur le modèle de visage personnalisé comprend :
obtenir une coordonnée UV d'un sommet sur le modèle de visage personnalisé dans le i-ième système de coordonnées UV, la coordonnée UV comprenant une coordonnée U et une coordonnée V ; et
déterminer une région dans laquelle un sommet ayant une coordonnée U supérieure ou égale à 0 est situé comme étant la région correspondant à la partie cible.

3. Procédé mis en œuvre par ordinateur selon la revendication 1, dans lequel la détermination (210a) de la région correspondant à la partie cible sur le modèle de visage personnalisé comprend :
obtenir une coordonnée UV d'un sommet sur le modèle de visage personnalisé dans le i-ième système de coordonnées UV, la coordonnée UV comprenant une coordonnée U et une coordonnée V ; et
déterminer une région dans laquelle un sommet ayant une coordonnée V supérieure ou égale à 0 est situé comme étant la région correspondant à la partie cible.

4. Procédé mis en œuvre par ordinateur selon la revendication 1, dans lequel le dessin (210c), sur la région correspondant à la partie cible, de la texture de motif cible dans la région visible comprend :
obtenir une relation de correspondance de coordonnées, la relation de correspondance de coordonnées comprenant une relation de correspondance entre une coordonnée de texture de la texture de motif cible et un sommet de la partie cible ; et
dessiner, sur la base de la relation de correspondance de coordonnées, la texture de motif cible dans la région visible sur la région correspondant à la partie cible sur le modèle de visage personnalisé.

5. Procédé mis en œuvre par ordinateur selon l'une quelconque des revendications 1 à 4, dans lequel la partie cible comprend au moins l'un parmi un œil, une bouche, un sourcil, un nez, une oreille et une coiffure.

6. Procédé mis en œuvre par ordinateur selon l'une quelconque des revendications 1 à 4, dans lequel un canal de couleur dans l'image de texture UV de base comprend des premières informations d'identification de position d'une première partie, et dans lequel le procédé comprend en outre :
obtenir un identifiant de couleur de la première partie à partir de l'image de texture UV de base ; déterminer un pixel correspondant à la première partie sur la base des premières informations d'identification de position dans le canal de couleur ; et
modifier une couleur du pixel correspondant à la première partie sur la base de l'identifiant de couleur.

7. Procédé mis en œuvre par ordinateur selon l'une quelconque des revendications 1 à 4, dans lequel un canal de couleur dans l'image de texture UV de base comprend des deuxièmes informations d'identification de position d'une deuxième partie, et la deuxième partie est définie sur l'image de texture UV de base, et dans lequel
le procédé comprend en outre :
obtenir un identifiant de motif de la deuxième partie ;
déterminer un pixel correspondant à la deuxième partie sur la base des deuxièmes informations d'identification de position dans le canal de couleur ; et
modifier une couleur du pixel correspondant à la deuxième partie sur la base d'informations de correspondance de couleurs correspondant à l'identifiant de motif.

8. Appareil pour afficher un visage personnalisé d'un personnage tridimensionnel, l'appareil comprenant :
un module d'obtention (601), configuré pour obtenir un identifiant de texture d'un modèle de visage personnalisé d'un personnage tridimensionnel,
dans lequel le modèle de visage personnalisé comprend n parties cibles, chaque partie cible étant configurée avec une image de texture UV, l'image de texture UV comprenant au moins deux textures de motif candidat correspondant à la partie cible,
dans lequel une image de texture UV correspondant à une i-ième partie cible est définie séparément dans un i-ième système de coordonnées UV, où n est un entier positif supérieur à 1, et i est inférieur ou égal à n, chacune de la pluralité d'images de texture UV comprend au moins deux textures de motif candidat de la partie cible, et
dans lequel l'identifiant de texture est utilisé pour identifier une texture de motif cible d'une partie cible parmi les n parties cibles sur le modèle de visage personnalisé, et l'identifiant de texture comprend des données de décalage de coordonnées et des données de mise à l'échelle de coordonnées ;
un module de dessin (602), configuré pour dessiner une image de texture UV de base sur le modèle de visage personnalisé, l'image de texture UV de base comprenant une texture d'une région autre que la partie cible ; et
un module de détermination (603), configuré pour déterminer, sur la base de l'identifiant de texture, la texture de motif cible parmi les au moins deux textures de motif candidat correspondant à la partie cible, et pour déterminer une région correspondant à la partie cible sur le modèle de visage personnalisé ;
le module de calcul est configuré pour définir une région visible dans le i-ième système de coordonnées UV sur la texture de motif cible dans l'image de texture UV par décalage de coordonnées et mise à l'échelle de coordonnées, dans lequel une position de départ de la région visible dans le i-ième système de coordonnées UV est définie à une position de la texture de motif cible par les données de décalage de coordonnées et une taille de région de la région visible dans le i-ième système de coordonnées UV est définie comme étant égale à une taille de la texture de motif cible par les données de mise à l'échelle de coordonnées ; et
le module de dessin (602) est configuré en outre pour dessiner, sur la région correspondant à la partie cible, la texture de motif cible dans la région visible ;
un premier client, configuré pour afficher une interface de paramétrage d'un visage personnalisé d'un personnage tridimensionnel, dans lequel l'interface de paramétrage comprend une image de prévisualisation d'un premier modèle de visage et n options de paramétrage ;
le premier client est configuré en outre pour recevoir une opération de paramétrage déclenchée sur une option de paramétrage cible parmi les n options de paramétrage, dans lequel l'opération de paramétrage est utilisée pour sélectionner une texture de motif cible parmi des textures de motif candidat correspondant à l'option de paramétrage cible ;
le premier client est configuré en outre pour générer un identifiant de texture correspondant à la texture de motif cible sur la base de l'opération de paramétrage ; et
signaler l'identifiant de texture à un serveur ; et
le serveur est configuré pour recevoir et stocker l'identifiant de texture et transmettre l'identifiant de texture du modèle de visage personnalisé du personnage tridimensionnel à au moins l'un parmi le premier client et un deuxième client.

9. Appareil selon la revendication 8, dans lequel le module de détermination (603) est configuré en outre pour :
obtenir une coordonnée UV d'un sommet sur le modèle de visage personnalisé dans le i-ième système de coordonnées UV, la coordonnée UV comprenant une coordonnée U et une coordonnée V ; et
déterminer une région dans laquelle un sommet ayant une coordonnée U supérieure ou égale à 0 est situé comme étant la région correspondant à la partie cible.

10. Appareil selon la revendication 8, dans lequel le module de détermination (603) est configuré en outre pour :
obtenir une coordonnée UV d'un sommet sur le modèle de visage personnalisé dans le i-ième système de coordonnées UV, la coordonnée UV comprenant une coordonnée U et une coordonnée V ; et
déterminer une région dans laquelle un sommet ayant une coordonnée V supérieure ou égale à 0 est situé comme étant la région correspondant à la partie cible.

11. Dispositif informatique (1900), comprenant un processeur (1901) et une mémoire (1902), la mémoire stockant des instructions lisibles par ordinateur, les instructions lisibles par ordinateur, lorsqu'elles sont chargées et exécutées par le processeur, exécutant les étapes du procédé d'affichage d'un visage personnalisé d'un personnage tridimensionnel selon l'une quelconque des revendications 1 à 7.

12. Support de stockage lisible par ordinateur, stockant des instructions lisibles par ordinateur, les instructions lisibles par ordinateur, lorsqu'elles sont chargées et exécutées par un processeur, exécutant les étapes du procédé d'affichage d'un visage personnalisé d'un personnage tridimensionnel selon l'une quelconque des revendications 1 à 7.
